(19) Europäisches Patentamt
European Patent Office
Office européen des brevets

(11) **EP 3 755 753 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19704027.2**

(22) Anmeldetag: **15.02.2019**

(51) Internationale Patentklassifikation (IPC):
***C09J 133/02*** *(2006.01)* ***C09J 179/00*** *(2006.01)*

(52) Gemeinsame Patentklassifikation (CPC):
(C-Sets verfügbar)
**C09J 179/00; C09J 133/02** (Forts.)

(86) Internationale Anmeldenummer:
**PCT/EP2019/053818**

(87) Internationale Veröffentlichungsnummer:
**WO 2019/162206 (29.08.2019 Gazette 2019/35)**

(54) **VERFAHREN ZUR HERSTELLUNG VON MIT KLEBSTOFF BESCHICHTETEN ARTIKELN**
METHOD FOR PRODUCING ARTICLES COATED WITH ADHESIVE
PROCÉDÉ DE PRODUCTION D’ARTICLES ENDUITS D’ADHÉSIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2018 EP 18157764**

(43) Veröffentlichungstag der Anmeldung:
**30.12.2020 Patentblatt 2020/53**

(73) Patentinhaber: **BASF SE**
**67056 Ludwigshafen am Rhein (DE)**

(72) Erfinder:
- **KIENER, Christoph**
**67056 Ludwigshafen (DE)**
- **HECKHOFF, Lars**
**67056 Ludwigshafen (DE)**
- **PREISHUBER-PFLUEGL, Peter**
**67056 Ludwigshafen (DE)**
- **BOCIEK, Richard**
**67056 Ludwigshafen (DE)**

(74) Vertreter: **BASF IP Association**
**BASF SE**
**GBI-C006**
**67056 Ludwigshafen (DE)**

(56) Entgegenhaltungen:

| | |
|---|---|
| EP-A1- 0 155 557 | EP-A1- 1 356 953 |
| EP-A1- 2 412 774 | EP-A1- 2 500 370 |
| EP-A2- 0 352 950 | EP-A2- 0 849 295 |
| EP-A2- 1 681 328 | EP-A2- 1 914 253 |
| WO-A1-01/98390 | WO-A1-99/06460 |
| WO-A1-99/67311 | WO-A1-03/031490 |
| WO-A1-03/033562 | WO-A1-2004/003049 |
| WO-A1-2004/045860 | WO-A1-2005/054323 |
| WO-A1-2007/068625 | WO-A1-2007/128789 |
| WO-A1-2009/067384 | WO-A1-2010/051293 |
| WO-A1-2010/058087 | WO-A1-2010/118948 |
| WO-A1-2011/020769 | WO-A1-2011/124651 |
| WO-A1-2013/096048 | WO-A1-2013/157436 |
| WO-A1-2014/044562 | WO-A1-2014/154483 |
| WO-A1-2016/124251 | WO-A1-2017/102777 |
| WO-A2-2005/087718 | WO-A2-2007/082826 |
| CN-A- 1 473 863 | CN-A- 101 230 120 |
| CN-A- 101 402 714 | CN-A- 101 429 417 |
| CN-A- 101 701 140 | CN-A- 102 140 219 |
| CN-A- 103 666 344 | CN-A- 104 328 711 |
| CN-A- 104 725 589 | CN-A- 105 064 036 |
| CN-A- 105 238 328 | CN-A- 106 634 499 |
| CN-A- 106 675 303 | CN-A- 106 753 160 |
| CN-A- 107 446 108 | CN-A- 107 841 222 |
| CN-A- 108 384 317 | CN-A- 108 707 216 |
| DE-A1-102004 063 380 | DE-A1-102005 005 846 |
| JP-A- H0 860 130 | JP-A- H04 238 018 |
| JP-A- H05 311 128 | JP-A- H06 145 611 |
| JP-A- H06 172 721 | JP-A- H07 118 350 |
| JP-A- H07 188 353 | JP-A- H09 165 432 |
| JP-A- H10 201 840 | JP-A- H10 201 841 |
| JP-A- S61 261 309 | JP-A- 2000 044 911 |
| JP-A- 2000 119 556 | JP-A- 2000 168 250 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 755 753 B1



**(Forts. nächste Seite)**

**JP-A- 2001 139 761**
**JP-A- 2001 207 151**
**JP-A- 2001 239 797**
**JP-A- 2004 034 642**
**JP-A- 2005 006 758**
**JP-A- 2005 060 445**
**JP-A- 2010 247 457**
**JP-A- 2011 237 608**
**JP-A- 2013 129 724**
**JP-A- 2013 139 533**
**JP-A- 2013 139 535**
**JP-A- 2015 143 351**
**KR-A- 20110 103 588**
**KR-B1- 101 956 469**
**US-A- 4 337 325**
**US-A- 4 636 546**
**US-A- 5 104 928**
**US-A- 5 914 282**
**US-A- 5 945 473**
**US-A1- 2006 177 651**
**US-A1- 2009 139 648**
**US-A1- 2011 244 160**
**US-A1- 2013 078 407**
**US-A1- 2013 165 618**
**US-B1- 6 716 493**

(52) Gemeinsame Patentklassifikation (CPC): (Forts.)

C-Sets
**C09J 133/02, C08L 39/06;**
**C09J 179/00, C08L 39/06**

**Beschreibung**

Die Erfindung betrifft ein Verfahren zur Herstellung von mit Klebstoff beschichteten Artikeln, wobei eine wässrige Dispersionsklebstoffzusammensetzung, enthaltend ein dispergiertes Klebstoffpolymer und ein gelöstes Polyvinylpyrrolidon auf ein Foliensubstrat mittels einer Beschichtungsmaschine mit mindestens einer rotierenden Walze bei hoher Bahngeschwindigkeit aufgetragen wird. Beschrieben wird auch die Verwendung von Polyvinylpyrrolidon als Entschäumer für wässrige Dispersionsklebstoffzusammensetzungen, die auf ein Foliensubstrat mittels einer Beschichtungsmaschine mit einer schnell laufenden rotierenden Walze aufgetragen werden. Es besteht ein großer Bedarf an kostengünstigen Klebstoffen für die Verbundfolienkaschierung mit guten anwendungstechnischen Eigenschaften, z.B. für flexible Nahrungsmittelverpackungen. In dieser Anwendung weit verbreitet sind Klebstoffsysteme auf Basis von organischen Lösungsmitteln. Zur Reduzierung von organischen Lösemittelemissionen stellen wasserbasierte Klebstoffsysteme eine wünschenswerte Alternative dar. Besondere Bedeutung haben wässrige Polymerdispersionen mit dispergierten Acrylatesterpolymeren, auch bekannt als Acrylatlatex, oder Polyurethandispersionen.

Auf Acrylatester basierte Klebstoffe für Kaschieranwendungen sind z.B. beschrieben in WO 98/23656, WO 00/50480 und WO 2017/102497. Bei der Verwendung von durch Emulsionspolymerisation unter Verwendung von Emulgatoren hergestellten Polymerdispersionen kann es zu einer unerwünschten Schaumbildung bei der maschinellen Folienbeschichtung kommen, insbesondere wenn die Beschichtung mittels rotierenden Walzen bei einer hohen Bahngeschwindigkeit der Folienbahn erfolgt. Es ist prinzipiell bekannt, Emulsionspolymerisation auch im Wesentlichen ohne Emulgatoren durchzuführen, wenn anstelle der Emulgatoren Schutzkolloide eingesetzt werden. Typische Schutzkolloide sind Säuregruppen aufweisende Polymere, welche bei Neutralisation der Säuregruppen bei erhöhten pH-Werten wasserlöslich sind. Die Schutzkolloide können allerdings wie Schaumstabilisatoren wirken, was wiederum zu einer unerwünschten Schaumbildung bei der maschinellen Folienbeschichtung führen kann. Eine Reduzierung des Gehalts an Emulgatoren und Schutzkolloiden ist nicht ohne weiteres möglich, da die Polymerdispersionen dann in der Regel nicht ausreichend stabil, z.B. nicht scherstabil sind und koagulieren können, insbesondere bei deren großtechnischen Herstellung im Tonnenmaßstab. In der WO 2017/102497 werden zwar emulgatorarme wässrige Polymerdispersionen beschrieben mit einer reduzierten Neigung zur Schaumbildung, bei Anwendungen für Folienbeschichtungen mit hohen Bahngeschwindigkeiten der Folienbahn ist aber eine weitere Minimierung der Schaumbildung wünschenswert. Weitere relevante Klebstoffe werden in US-A-2013/078407, US- A-4337325, EP-A-155557 und WO-A-2016/124251 offenbart.

Die von den in den Klebstoffpolymerdispersionen enthaltenen Emulgatoren, Netzmitteln und Schutzkolloiden bewirkte Neigung zum Schäumen führt besonders dann zu Störungen, wenn mit hoher Geschwindigkeit und hohem Dispersionsüberschuss gearbeitet wird; wenn also die Dispersion durch die Antragswalze sehr stark gerührt oder mehrfach umgewälzt wird. Es sind dann entweder verfahrenstechnische Maßnahmen (Schaumabsetzbehälter) oder chemische Zusätze (Entschäumer) erforderlich. Die Entschäumer, z. B. auf Silikonbasis, auf Basis organischer Öle, höhere Alkohole oder deren Derivate, nichtionogene Acetylenverbindungen, aliphatische Kohlenwasserstoffe, zeigen je nach dem in der Polymerdispersion enthaltenen Hilfsstoffsystem unterschiedliche Wirksamkeit, die zudem mit zunehmender Lagerzeit abnehmen kann. Der Entschäumer kann z. B. aufschwimmen, sich absetzen oder in das Polymer hineindiffundieren und steht dann an de Grenzfläche Flüssigkeit/Luft nicht mehr zur Verfügung. Oder der Entschäumer kann in unerwünschter Weise die Klebewirkung beeinträchtigen.

Die Aufgabe bestand darin, ein Verfahren zur maschinellen Beschichtung von Folien mit wässrigen Klebstoffdispersionen bei hoher Bahngeschwindigkeit zur Verfügung zu stellen, bei dem eine unerwünschte Schaumbildung möglichst minimiert wird und gleichzeitig die Stabilität der Klebstoffdispersion und die Klebewirkungen möglichst nicht oder möglichst wenig beeinträchtigt werden, z.B. hinsichtlich Verbundklebewerten.

Es wurde gefunden, dass die Aufgabe gelöst werden kann durch das nachfolgend näher erläuterte Verfahren.

Gegenstand der Erfindung ist ein Verfahren zur Herstellung von mit Klebstoff beschichteten Artikeln, wobei eine wässrige Dispersionsklebstoffzusammensetzung, enthaltend

(a) mindestens ein in der wässrigen Phase dispergiertes Klebstoffpolymer und
(b) mindestens ein in der wässrigen Phase gelöstes Polyvinylpyrrolidon,

auf ein Foliensubstrat mittels einer Beschichtungsmaschine mit mindestens einer rotierenden Walze aufgetragen wird, wobei die Bahngeschwindigkeit des Foliensubstrats mindestens 150 m/min, vorzugsweise mindestens 200 m/min beträgt, und wobei das beschichtete Foliensubstrat optional mit einem weiteren Substrat verklebt wird.

Gegenstand der Erfindung ist auch die Verwendung einer wässrigen Dispersionsklebstoffzusammensetzung enthaltend

(a) mindestens ein in der wässrigen Phase dispergiertes Klebstoffpolymer und
(b) in der wässrigen Phase gelöstes Polyvinylpyrrolidon

zur Herstellung von maschinell mit der Dispersionsklebstoffzusammensetzung beschichteten Folien, vorzugsweise zur Herstellung von Verbundfolien, oder für die Kaschierung von starren Formkörpern mit maschinell mit der Dispersionsklebstoffzusammensetzung beschichteten flexiblen Dekorationsfolien, wobei die wässrige Dispersionsklebstoffzusammensetzung auf ein Foliensubstrat mittels einer Beschichtungsmaschine mit mindestens einer rotierenden Walze aufgetragen wird, wobei die Bahngeschwindigkeit des Foliensubstrats mindestens 150 m/Minute beträgt.

Gegenstand der Erfindung ist auch die Verwendung von Polyvinylpyrrolidon als Entschäumer für wässrige Dispersionsklebstoffzusammensetzungen, die auf ein Foliensubstrat mittels einer Beschichtungsmaschine mit mindestens einer rotierenden Walze aufgetragen werden, wobei die Bahngeschwindigkeit des Foliensubstrats mindestens 150 m/Minute beträgt.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur wird durch Differential Scanning Calorimetrie (ASTM D 3418-08, sogenannte "midpoint temperature") bestimmt werden. Die Glasübergangstemperatur des Polymerisats der Polymerdispersion ist die bei Auswertung der zweiten Heizkurve (Heizrate 20° C/min) erhaltene Glasübergangstemperatur.

Die Dispersionsklebstoffzusammensetzung enthält vorzugsweise

(i) von 30 bis 60 Gew.%, besonders bevorzugt von 40 bis 55 Gew.% des mindestens einen Klebstoffpolymers und
(ii) von 0,02 bis 2 Gew.%, besonders bevorzugt von 0,04 bis 1,2 Gew.% des Polyvinylpyrrolidons.

Das Klebstoffpolymer ist vorzugsweise ausgewählt aus Polyurethanen und Polymeren, die herstellbar sind durch radikalische Emulsionspolymerisation von ethylenisch ungesättigten, radikalisch polymerisierbaren Monomeren, nachfolgend auch Emulsionspolymerisat genannt. Die radikalisch polymerisierbaren Monomeren umfassen vorzugsweise

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe, vorzugsweise ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat und Mischungen dieser Monomere;
c) optional mindestens einem weiteren, von den Monomeren a) und b) verschiedenen Monomer.

Vorzugsweise ist das Klebstoffpolymer herstellbar durch radikalische Emulsionspolymerisation von ethylenisch ungesättigten, radikalisch polymerisierbaren Monomeren umfassend

a) 60 bis 99,9 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylaromaten mit bis zu 20 C-Atomen, und
b) 0,1 bis 5 Gew.%, bezogen auf die Gesamtmenge an Monomeren, mindestens eines Monomeren mit mindestens einer Säuregruppe, ausgewählt aus Acrylsäure, Methacrylsäure und Itaconsäure und
c) 0 bis 10 Gew.%, bezogen auf die Gesamtmenge an Monomeren, an weiteren, von den Monomeren a) bis b) verschiedenen Monomeren, ausgewählt aus der Gruppe bestehend aus Acrylamid, Methacrylamid, N-Methylolacrylamid, N-Methylolmethacrylamid, Phenyloxyethyl-glykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen.

<u>Monomere a)</u>

Die Monomerenmischung besteht vorzugsweise aus mindestens 60 Gew.%, bevorzugt zu mindestens 80 Gew.-%, z.B. von 60 bis 99,9 Gew.% oder von 80 bis 99,9 Gew.%, oder von 80 bis 98 Gew.%, besonders bevorzugt zu mindestens 90 Gew.-% bezogen auf die Gesamtmenge an Monomeren, aus mindestens einem Monomeren a) ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere.

Geeignete Monomere a) sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat sowie Behenyl(meth)acrylat, Isobutylacrylat, tert.-Butyl(meth)acrylat und Cyclohexyl(meth)acrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Monomere a) bevorzugt sind die $C_1$- bis $C_{10}$-Alkylacrylate, C1- bis C10-Alkylmethacrylate, insbesondere $C_1$-bis $C_8$-Alkylacrylate und -methacrylate sowie Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat, Styrol sowie Mischungen dieser Monomere.

Monomere b)

Die Monomerenmischung besteht vorzugsweise zu mindestens 0,1 Gew.-%, insbesondere von 0,1 bis 5 Gew.% oder von 0,5 bis 3 Gew.%, bezogen auf die Gesamtmenge an Monomeren, aus mindestens einem ethylenisch ungesättigten Monomeren mit mindestens einer Säuregruppe (Säuremonomer). Die Säuremonomere b) umfassen sowohl Monomere, die wenigstens eine saure Gruppen enthalten, als auch deren Anhydride und deren Salze. Zu den Monomeren b) zählen alpha,beta-monoethylenisch ungesättigte Mono- und Dicarbonsäuren, Halbester von alpha, beta-monoethylenisch ungesättigten Dicarbonsäuren, die Anhydride der vorgenannten alpha, beta-monoethylenisch ungesättigten Carbonsäuren sowie ethylenisch ungesättigte Sulfonsäuren, Phosphonsäuren oder Dihydrogenphosphate und deren wasserlösliche Salze, z. B. deren Alkalimetallsalze. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugte Monomere b) sind alpha,beta-monoethylenisch ungesättigte C3-C8-Carbonsäuren und C4-C8-Dicarbonsäuren, z. B. Itaconsäure, Crotonsäure, Vinylessigsäure, Acrylamidoglykolsäure, Acrylsäure und Methacrylsäure, sowie deren Anhydride. Besonders bevorzugte Monomere b) sind Itaconsäure, Acrylsäure und Methacrylsäure.

Die Säuregruppen des Monomers b) können zu Beginn der Polymerisation noch unneutralisiert vorliegen und erst während oder nach der Emulsionspolymerisation ganz oder teilweise durch Zulauf einer Base neutralisiert werden, wobei z.B. der Zulauf der Base während der Emulsionspolymerisation (d. h. nach dem Start der Polymerisationsreaktion) beginnt nachdem mindestens 5 Gew.%, vorzugsweise 10 bis 70 Gew.% der gesamten Monomerenmischung im Reaktionsgefäß unter Polymerisationsbedingungen vorliegen. Das Neutralisationsmittel kann z. B. in einem separaten Zulauf parallel zum Zulauf der Monomermischung zugegeben werden. Nach Zulauf sämtlicher Monomere ist vorzugsweise die zur Neutralisation von mindestens 10 %, vorzugsweise 10 bis 100 % oder 25 bis 90 % Säureäquivalenten benötigte Menge an Neutralisationsmittel in dem Polymerisationsgefäß enthalten. Geeignete Basen sind z.B. Natronlauge, Kalilauge, Ammoniak (vorzugsweise in wässriger Lösung) oder organische Amine, vorzugsweise tertiäre Amine, insbesondere Trialkylamine mit vorzugsweise 1 bis 4 C-Atomen in der Alkylgruppe wie z. B. Triethylamin.

Monomere c)

Die Monomerenmischung kann optional mindestens ein weiteres, von den Monomeren a) und b) verschiedenes Monomer c) enthalten. Die Monomere c) können z.B. von 0 bis 10 Gew.% oder von 0 bis 5 Gew.-%, insbesondere von 0,1 bis 10 Gew.% oder von 0,1 bis 5 Gew.% oder von 0,2 bis 3 Gew.%, bezogen auf die Gesamtmenge an Monomeren eingesetzt werden.

Monomere c) sind beispielsweise neutrale bzw. nichtionische Monomere mit erhöhter Wasserlöslichkeit, z. B. die Amide oder die N-Alkylolamide der vorgenannten ethylenisch ungesättigten Carbonsäuren, beispielsweise Acrylamid, Methacrylamid, N-Methylolacrylamid und N-Methylolmethacrylamid oder Phenyloxyethylglykolmono(meth)acrylat genannt. Weitere Monomere c) sind z. B. auch Hydroxylgruppen enthaltende Monomere, insbesondere die Hydroxyalkylester der vorgenannten alpha,beta-monoethylenisch ungesättigten Carbonsäuren, vorzugsweise $C_1$-$C_{10}$-Hydroxyalkyl(meth)acrylate wie z.B. Hydroxyethylacrylat, Hydroxyethylmethacrylat, Hydroxypropylacrylat oder Hydroxypropylmethacrylat sowie 4-Hydroxybutylacrylat.

Weitere Monomere c) sind z. B. auch Aminogruppen enthaltende Monomere, insbesondere die Aminoalkylester der vorgenannten alpha,beta-monoethylenisch ungesättigten Carbonsäuren, vorzugsweise $C_1$-$C_{10}$-Aminoalkyl(meth)acrylate wie z. B. 2-Aminoethyl-(meth)acrylat oder tert.-Butylaminoethylmethacrylat. Weiterhin kommen als Monomere c) die Nitrile alpha,beta-monoethylenisch ungesättigter C3-C8-Carbonsäuren, wie z.B. Acrylnitril oder Methacrylnitril in Betracht.

Geeignete Monomere c) sind auch bifunktionelle Monomere, die neben einer ethylenisch ungesättigten Doppelbindung wenigstens eine Glycidylgruppe, Oxazolingruppe, Ureidogruppe, ureido-analoge Gruppe oder Carbonylgruppe aufweisen und vernetzenden Monomeren, welche mehr als eine radikalisch polymerisierbare Gruppe aufweisen. Beispiele für Monomere mit Glycidylgruppe sind ethylenisch ungesättigte Glycidylether und Glycidylester, z. B. Vinyl-, Allyl- und Methallylglycidylether, Glycidyl(meth)acrylat. Beispiele für Monomere mit Carbonylgruppe sind die Diacetonylamide der obengenannten ethylenisch ungesättigten Carbonsäuren, z.B. Diaceton(meth)acrylamid und die Ester der Acetylessigsäure mit den obengenannten Hydroxyalkylestern ethylenisch ungesättigter Carbonsäuren, z.B. Acetylacetoxyethyl(meth)acrylat.

Beispiele für Monomere c) mit Oxazolingruppe sind solche der Formel:

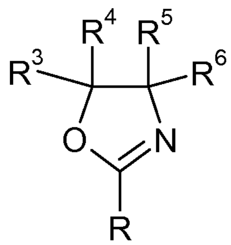

wobei die Reste die folgenden Bedeutungen haben:

R ist ein $C_{2-20}$-Alkenylrest, umfassend mindestens eine ethylenisch ungesättigte Gruppe; $R^3$, $R^4$, $R^5$, $R^6$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl.

Insbesondere bevorzugt handelt es sich bei den Oxazolin-Monomeren um mindestens ein Monomer ausgewählt aus der Gruppe bestehend aus 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-teramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2-Isopropenyl-5,5-dimethyl-2-oxazolin und 2- Isopropenyl-4,4,5,5-teramethyl-2-oxazolin. Besonders bevorzugt ist die Verwendung von 2-Vinyl-2-oxazolin und/oder 2-Isopropenyl-2-oxazolin, insbesondere bevorzugt ist 2-Isopropenyl-2-oxazolin (iPOx).

Beispiele für Monomere c) mit Ureidogruppe oder ureido-analoger Gruppe sind z. B. solche der Formel

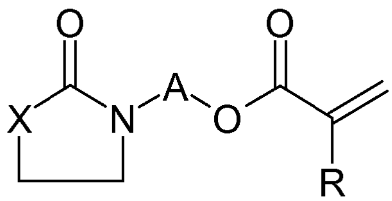

wobei X für $CH_2$, O, NH oder $NR^1$ steht und $R^1$ für eine C1 bis C4-Alkylgruppe steht, R für Wasserstoff oder Methyl steht und A für eine divalente Verbindungsgruppe steht, vorzugsweise für eine C1 bis C10-Alkylgruppe oder für eine C2 bis C4-Alkylgruppe. Besonders bevorzugt sind Ureidoalkyl(meth)acrylate mit 1 bis 10 C-Atomen, vorzugsweise 2 bis 4 C-Atomen in der Alkylgruppe, insbesondere Ureidoethylmethacrylat (UMA).

Beispiele für Monomere c) sind auch vernetzende Monomere, welche mehr als eine radikalisch polymerisierbare Gruppe aufweisen, insbesondere zwei oder mehr (Meth)acrylatguppen wie z.B. Butandioldi(meth)acrylat oder Allylmethacrylat.

Bevorzugte Monomere c) sind solche, die die Nachvernetzung des Polymers, beispielsweise mit polyfunktionellen Aminen, Hydraziden, Isocyanaten oder Alkoholen ermöglichen. Eine Vernetzung ist auch durch Metallsalzvernetzung der Carboxylgruppen möglich unter Verwendung von mehrwertigen Metallkationen, z.B. Zn oder Al.

Eine geeignete Vernetzung kann z.B. dadurch erfolgen, dass das Polymer Keto- oder Aldehydgruppen enthält (vorzugsweise 0,0001 bis 1 Mol, oder 0,0002 bis 0,10 Mol, oder 0,0006 bis 0,03 Mol) und die Polymerdispersion zusätzlich

eine Verbindung enthält mit mindestens 2 funktionellen Gruppen, insbesondere 2 bis 5 funktionellen Gruppen, die mit den Keto- oder Aldehydgruppen eine Vernetzungsreaktion eingehen. Die Keto- oder Aldehydgruppen können durch Copolymerisation von geeigneten Monomeren c) an das Polymer gebunden. Geeignete Monomere c) sind z.B. Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto- oder Aldehydgruppen bzw. einer Aldehyd- und einer Ketogruppe im Alkylrest, wobei der Alkylrest vorzugsweise insgesamt 3 bis 10 C-Atome umfasst, z. B. (Meth)acryloxyalkylpropanale. Des Weiteren eignen sich auch N-Oxoalkyl(meth)acrylamide. Besonders bevorzugt sind Acetoacetyl(meth)acrylat, Acetoacetoxyethyl(meth) acrylat und insbesondere Diacetonacrylamid.

Verbindungen, die mit den Keto- oder Aldehydgruppen eine Vernetzungsreaktion eingehen können sind z.B. Verbindungen mit Hydrazid-, Hydroxylamin-, Oximether- oder Aminogruppen. Geeignete Verbindungen mit Hydrazidgruppen sind z.B. Polycarbonsäurehydrazide mit einem Molgewicht von bis zu 500 g/mol. Bevorzugte Hydrazidverbindungen sind Dicarbonsäuredihydrazide mit bevorzugt 2 bis 10 C-Atomen. Genannt seien z.B. Oxalsäuredihydrazid, Malonsäuredihydrazid, Bernsteinsäuredihydrazid, Glutarsäuresäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Besonders bevorzugt sind Adipinsäuredihydrazid, Sebazinsäuredihydrazid und Isophthalsäuredihydrazid. Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die "Jeffamine", Cyclohexandiamin und Xylylendiamin. Die Verbindung mit den funktionellen Gruppen kann der Zusammensetzung, bzw. der Dispersion des Polymeren zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein. Die Menge der Verbindung mit dem funktionellen Gruppen wird vorzugsweise so bemessen, dass das Molverhältnis der funktionellen Gruppen zu den Keto- und/oder Aldehydgruppen des Polymeren 1 : 10 bis 10 : 1, insbesondere 1 : 5 bis 5 : 1, besonders bevorzugt 1 : 2 bis 2 : 1 und ganz besonders bevorzugt 1 : 1,3 bis 1,3 : 1 beträgt. Insbesondere sind äquimolare Mengen der funktionellen Gruppen und der Keto- und/oder Aldehydgruppen bevorzugt.

Vorzugsweise ist das in der wässrigen Phase dispergierte Klebstoffpolymer ein Styrol/Acrylat Copolymer, gebildet aus einem Monomerengemisch enthaltend Styrol und mindestens ein Monomer ausgewählt aus C1- bis C20-Alkylacrylaten und C1- bis C20-Alkylmethacrylaten, z.B. einen Monomerengemisch enthaltend oder bestehend aus 40 bis 70 Gew.% mindestens eines C2- bis C8-Alkylacrylats (vorzugsweise Butylacrylat oder Ethylhexylacrylat), 25 bis 55 Gew.% Styrol und 0,5 bis 5 Gew.% Säuremonomere.

Als in der wässrigen Phase dispergierte Klebstoffpolymere bevorzugt sind auch Acrylatpolymere, gebildet aus einem Monomerengemisch enthaltend oder bestehend aus 75 bis 90 Gew.% mindestens eines C2- bis C8-Alkylacrylats (vorzugsweise Ethylacrylat, Butylacrylat oder Ethylhexylacrylat), 5 bis 20 Gew.% Methyl(meth)acrylat und 0,5 bis 5 Gew.% Säuremonomere.

Vorzugsweise sind die Monomere der Polymerisation so ausgewählt, dass die gemessene Glasübergangstemperatur des Klebstoffpolymers im Bereich von -40 °C bis +15 °C, insbesondere von -35 °C bis +10 °C oder von -10 °C bis +10 °C liegt. Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

In einer Ausführungsform der Erfindung wird bei der radikalischen Polymerisation mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 0,8 Gew.-Teile und ganz besonders bevorzugt 0,1 bis 0,6 Gew.-Teile, bezogen auf 100 Gew.-Teile der zu polymerisierenden Monomeren. Geeignete Regler sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol. Bevorzugt sind 2-Ethylhexylthioglycolat (EHTG), Isooctyl-3-mercaptopropionat (IOMPA) und tert.-Dodecylmercaptan (tDMK).

Die Polymerisation kann saatkontrolliert erfolgen, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, oder von 0,03 bis kleiner oder gleich 0,1 Gew.-Teilen bezogen auf 100 Gewichtsteile Monomere. Geeignet ist z.B. ein Latex auf Basis von Polystyrol oder auf Basis von Polymethylmethacrylat. Ein bevorzugter Saatlatex ist Polystyrolsaat.

Bei der Emulsionspolymerisation werden ethylenisch ungesättigte Verbindungen (Monomere) in Wasser polymerisiert, wobei meist ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: $C_8$- bis $C_{36}$), ethoxylierte Mono-, Di- und Trialkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$- bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel

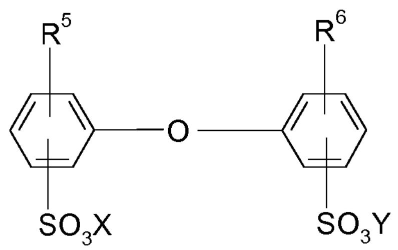

worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax® 2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z.B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt vorzugsweise bei 30 bis 130 °C, vorzugsweise bei 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann in Form eines Zulaufverfahrens, einschließlich Stufen- oder Gradientenfahrweise, durchgeführt werden. Bei der Polymerisation kann zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 60 Gew.-%, besonders bevorzugt größer oder gleich 50 Gew.-% erhalten.

Das so hergestellte Polymerisat wird vorzugsweise in Form seiner wässrigen Dispersion verwendet. Die Größenverteilung der Dispersionsteilchen kann monomodal, bimodal oder polymodal sein und ist vorzugsweise monomodal. Der mittlere Teilchendurchmesser der in der wässrigen Dispersion dispergierten Polymerteilchen ist vorzugsweise größer als 200 nm, vorzugsweise größer 250 nm, z. B. von 200 nm bis 400 nm oder von 250 nm bis 350 nm. Die Messung von mittleren Teilchendurchmessern $x_{PCS}$ und Teilchengrößenverteilung erfolgt durch Photonenkorrelationsspektroskopie (ISO-Norm 13321:1996). Eine monomodale Größenverteilung der Dispersionsteilchen liegt dann vor, wenn bei der Messung der Teilchengrößenverteilung nur ein einziges Maximum vorliegt.

Die bevorzugte Dispersion des Klebstoffpolymers ist eine wässrige Polymerdispersion enthaltend in Wasser dispergierte Polymerpartikel mit einem mittleren Teilchendurchmesser von größer 200 nm, vorzugsweise größer 250 nm, wobei die Polymerpartikel eine monomodale Teilchengrößenverteilung und eine einheitliche Glasübergangstemperatur aufweisen,

hergestellt durch radikalische Emulsionspolymerisation einer einzigen Monomerenmischung (d.h. durch einstufige Herstellung) enthaltend ethylenisch ungesättigte, radikalisch polymerisierbare Monomere,
unter Verwendung einer Polymersaat,
weniger als 0,8 Gewichtsteile, vorzugsweise kleiner oder gleich 0,5 Gewichtsteile Emulgator, bezogen auf 100 Gewichtsteile Monomere,
ohne Zusatz von Schutzkolloiden und ohne in-situ Bildung von Schutzkolloiden,
wobei die Monomerenmischung besteht aus

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe;
c) optional mindestens einem weiteren, von den Monomeren a) und b) verschiedenen Monomer;

wobei der Zulauf der Monomerenmischung während der Polymerisation mit einer ersten und mit mindestens einer zweiten Zulaufgeschwindigkeiten erfolgt, wobei die erste Zulaufgeschwindigkeit vorzugsweise langsamer als die zweite Zulaufgeschwindigkeit ist und wobei die Säuregruppen der Monomere b) während der Emulsionspolymerisation ganz oder teilweise durch Zulauf einer Base neutralisiert werden, wobei der Zulauf der Base während der Emulsionspolymerisation beginnt nachdem mindestens 5 Gew.%, vorzugsweise 10 bis 70 Gew.% der gesamten Monomerenmischung im Reaktionsgefäß unter Polymerisationsbedingungen vorliegen. Die Messung von Teilchendurchmessern und Teilchengrößenverteilung erfolgt durch Photonenkorrelationsspektroskopie (ISO-Norm 13321:1996).

Das Prinzip der Herstellung dieser bevorzugten Polymerdispersion beruht auf der saatgesteuerten Bildung von einheitlichen, großen Polymerpartikeln in wässriger Dispersion unter weitgehender Vermeidung der Bildung von wasserlöslichen Oligomeren und Polymeren. Die Polymerisation erfolgt dabei vorzugsweise emulgatorfrei oder emulgatorarm in dem Sinne, dass weniger als 0,8, vorzugsweise kleiner oder gleich 0,5 Gewichtsteile Emulgator, bezogen auf 100 Gewichtsteile Monomere, zur Stabilisierung der erfindungsgemäßen Polymerdispersion zugesetzt werden. Emulgatoren sind der Polymerisationsmischung vor oder nach der Polymerisation zugesetzte, nicht-polymere, amphiphile, oberflächenaktive Substanzen. Geringe Mengen an Emulgatoren, die z.B. durch die Verwendung von emulgatorstabilisierter Polymersaat bedingt sind, sind dabei unschädlich. Vorzugsweise wird insgesamt weniger als 0,3 Gew.-Teile oder weniger als 0,2 Gew.-Teile Emulgator, z. B. von 0,05 bis 0,8 Gew.-Teile, oder von 0,05 bis 0,5 Gew.-Teile, oder von 0,05 bis 0,3 Gew.-Teile, bezogen auf 100 Gewichtsteile Monomere oder kein Emulgator verwendet. Die Stabilisierung der entstehenden Polymerdispersion erfolgt vorzugsweise durch die spezielle Fahrweise. Diese beruht auf einem langsamen anfänglichen Monomerzulauf in Gegenwart von sehr geringer Menge an Polymersaat (Saatkontrolle) gefolgt von der Neutralisation der verwendeten Säuremonomeren im Verlauf der Polymerisation.

Die Polymerisation erfolgt dabei vorzugsweise ohne Zusatz von Schutzkolloiden und ohne in-situ Bildung von Schutzkolloiden. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht von Schutzkolloide liegt z.B. oberhalb von 1000 g/mol.

Die Säuregruppen des Monomers b) sind zu Beginn der Polymerisation vorzugsweise noch nicht neutralisiert. Sie werden vorzugsweise erst während der Emulsionspolymerisation ganz oder teilweise durch Zulauf einer Base neutralisiert, wobei der Zulauf der Base während der Emulsionspolymerisation (d.h. nach dem Start der Polymerisationsreaktion) beginnt nachdem mindestens 5 Gew.%, vorzugsweise 10 bis 70 Gew.% der gesamten Monomerenmischung im Reaktionsgefäß unter Polymerisationsbedingungen vorliegen. Das Neutralisationsmittel kann z.B. in einem separaten Zulauf parallel zum Zulauf der Monomermischung zugegeben werden. Nach Zulauf sämtlicher Monomere ist vorzugsweise die zur Neutralisation von mindestens 10%, vorzugsweise 10 bis 100 % oder 25 bis 90 % Säureäquivalenten benötigte Menge an Neutralisationsmittel in dem Polymerisationsgefäß enthalten.

Geeignete Basen sind z. B. Natronlauge, Kalilauge, Ammoniak oder organische Amine, vorzugsweise tertiäre Amine, insbesondere Trialkylamine mit vorzugsweise 1 bis 4 C-Atomen in der Alkylgruppe wie z.B. Triethylamin.

Die Polymerisation erfolgt vorzugsweise saatkontrolliert, d.h. in Gegenwart von Polymersaat (Saatlatex). Saatlatex ist eine wässrige Dispersion von feinteiligen Polymerpartikeln mit einem mittleren Teilchendurchmesser von vorzugsweise 20 bis 40 nm. Saatlatex wird eingesetzt in einer Menge von vorzugsweise 0,01 bis 0,5 Gew.-Teilen, besonders bevorzugt von 0,03 bis 0,3 Gew.-Teilen, oder von 0,03 bis kleiner oder gleich 0,1 Gew.-Teilen bezogen auf 100 Gewichtsteile Monomere. Geeignet ist z. B. ein Latex auf Basis von Polystyrol oder auf Basis von Polymethylmethacrylat. Ein bevorzugter Saatlatex ist Polystyrolsaat.

Vorzugsweise erfolgt die Zugabe der Monomerenmischung nach dem Start der Polymerisationsreaktion durch Zulauf der Monomerenmischung mit einer ersten und mit mindestens einer zweiten Zulaufgeschwindigkeit, wobei die erste Zulaufgeschwindigkeit langsamer sein kann als die zweite Zulaufgeschwindigkeit. Vorzugsweise ist die erste Zulaufgeschwindigkeit langsamer als die zweite Zulaufgeschwindigkeit. Beispielsweise wird die (durchschnittliche) Zulaufgeschwindigkeit um den Faktor 2 bis 10 erhöht nachdem 3 bis 30 Gew.%, vorzugsweise 5 bis 20 Gew.% der gesamten Monomerenmischung zugegeben wurden. Die Erhöhung der Zulaufgeschwindigkeit kann dabei in einer oder mehreren Stufen oder kontinuierlich erfolgen.

Die Dispersionsklebstoffzusammensetzung kann als Einkomponentenmittel angewendet, d.h. ohne zusätzliche Vernetzungsmittel, insbesondere ohne Isocyanatvernetzer. Jedoch kann die Dispersionsklebstoffzusammensetzung auch ein in der wässrigen Phase dispergiertes vernetzbares Klebstoffpolymer und mindestens einen reaktiven Vernetzer enthalten. Es handelt sich dann vorzugsweise um einen zweikomponentigen Klebstoff, bei dem eine Vernetzungskomponente, wie z.B. ein Isocyanat, vorzugsweise ein wasseremulgierbares Isocyanat zugesetzt wird.

Als Klebstoffpolymer können auch Polyurethane eingesetzt werden. Geeignete Polyurethandispersionen sind prinzipiell durch Umsetzung wenigstens eines Polyisocyanats mit wenigstens einer Verbindung, die mindestens zwei gegenüber Isocyanatgruppen reaktive Gruppen aufweist, und Dispersion in Wasser erhältlich. Geeignete Polyurethane

umfassen auch sogenannte Polyurethan-Polyharnstoffe, welche neben Polyurethangruppen auch noch Harnstoffgruppen aufweisen. Bevorzugt enthält die Polyurethandispersion wenigstens ein Polyurethan, das wenigstens ein Polyisocyanat und wenigstens ein polymeres Polyol einpolymerisiert enthält. Insbesondere kann das Polyurethan gebildet sein aus wenigstens einem Polyisocyanat und wenigstens einem polymeren Polyol. Geeignete polymere Polyole sind vorzugsweise ausgewählt unter Polyesterdiolen, Polyetherdiolen, Polycarbonatdiolen und Gemischen davon. Das polymere Polyol weist vorzugsweise ein zahlenmittleres Molekulargewicht im Bereich von etwa 500 bis 5000 g/mol auf. Bevorzugt sind polymere Diole. Bevorzugt enthält die Polyurethandispersion wenigstens ein Polyurethan, das wenigstens ein Polyisocyanat und eine Diolkomponente einpolymerisiert enthält, von denen a) 10-100 mol-% bezogen auf die Gesamtmenge der Diole, ein Molekulargewicht von 500 bis 5000 g/mol aufweisen und b) 0 - 90 mol-% bezogen auf die Gesamtmenge der Diole, ein Molekulargewicht von 60 bis 500 g/mol aufweisen.

Vorzugsweise ist das Polyurethan zu mindestens 40 Gew.-%, besonders bevorzugt zu mindestens 60 Gew.-% und ganz besonders bevorzugt zu mindestens 80 Gew.-%, bezogen auf das Gesamtgewicht der zur Herstellung des Polyurethans eingesetzten Monomere, aus wenigstens einem Diisocyanat und wenigstens einem Polyetherdiol und/oder Polyesterdiol aufgebaut. Geeignete weitere Aufbaukomponenten ad 100 Gew.-% sind z. B. die im Folgenden aufgeführten Polyisocyanate mit wenigstens drei NCO-Gruppen und von den polymeren Polyolen verschiedene Verbindungen mit wenigstens zwei gegenüber Isocyanatgruppen reaktiven Gruppen. Dazu zählen z. B. Diole; Diamine; von polymeren Polyolen verschiedene Polymerisate mit mindestens zwei aktiven Wasserstoffatomen pro Molekül; Verbindungen, die zwei aktive Wasserstoffatome und mindestens eine ionogene bzw. ionische Gruppe pro Molekül aufweisen; und Mischungen davon.

Vorzugsweise hat das Polyurethan einen Erweichungspunkt oder Schmelzpunkt im Bereich von -50 bis 150 °C, besonders bevorzugt von 0 bis 100 °C, und ganz besonders bevorzugt von 10 bis 90 °C. Besonders bevorzugt hat das Polyurethan einen Schmelzpunkt im vorstehenden Temperaturbereich.

Bevorzugte Polyurethane sind aufgebaut aus:

a) wenigstens einem monomeren Diisocyanat,
b) wenigstens einem Diol, wobei die Komponente (b) wenigstens ein Diol mit einem zahlenmittleren Molekulargewicht im Bereich von 500 bis 5000 g/mol aufweist,
c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt,
d) optional wenigstens einer weiteren, von den Monomeren (a) bis (c) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und
e) optional wenigstens einer von den Monomeren (a) bis (d) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

Die Komponente b) besteht vorzugsweise aus

$b_1$) 10 bis 100 mol-%, bezogen auf die Gesamtmenge der Komponente b), Diole, die ein Molekulargewicht von 500 bis 5000 g/mol aufweisen,
$b_2$) 0 bis 90 mol-%, bezogen auf die Gesamtmenge der Komponente b), Diole, die ein Molekulargewicht von 60 bis weniger als 500 g/mol aufweisen.

Besonders bevorzugt beträgt das Verhältnis der Diole $b_1$) zu den Monomeren $b_2$) 0,1 : 1 bis 5:1, besonders bevorzugt 0,2 : 1 bis 2 : 1. Insbesondere ist das Diol b) ausgewählt aus Polytetrahydrofuran, Polypropylenoxid und Polyesterdiolen, ausgewählt aus Umsetzungsprodukten zweiwertiger Alkohole mit zweiwertigen Carbonsäuren und Polyesterdiolen auf Lacton-Basis.

Insbesondere zu nennen sind als Monomere (a) Diisocyanate $X(NCO)_2$, wobei X für einen nicht-cyclischen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanatodiphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich. Als Gemische dieser Isocyanate sind besonders die Mischungen der jeweiligen Strukturisomeren von Diisocyanatotoluol und Diisocyanatodiphenylmethan von Bedeutung, insbesondere ist die Mischung aus 80 mol-% 2,4-Diisocyanatotoluol und 20 mol-% 2,6-Diisocyanatotoluol geeignet und bevorzugt. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 1:9 bis 9:1, insbesondere 4 : 1 bis 1 : 4 beträgt.

Bei den Diolen (b1) kann es sich um Polyesterpolyole handeln, die z. B. aus Ullmanns Enzyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z. B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- $(CH_2)_y$-COOH, wobei y eine Zahl von 1 bis 20, bevorzugt eine gerade Zahl von 2 bis 20 ist, z. B. Bernsteinsäure, Adipinsäure, Sebacinsäure und Dodecandicarbonsäure. Als zweiwertige Alkohole kommen z. B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-$(CH_2)_x$-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bei den Diolen (b1) kann es sich auch um Polycarbonat-Diole handeln, wie sie z. B. durch Umsetzung von Phosgen mit einem Überschuss von den als Aufbaukomponenten für die Polyesterpolyole genannten niedermolekularen Alkohole erhalten werden können, in Betracht.

Bei den Diolen (b1) kann es sich auch um Polyesterdiole auf Lacton-Basis handeln, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-$(CH_2)_z$-COOH ableiten, wobei z eine Zahl von 1 bis 20 ist und ein H-Atom einer Methyleneinheit auch durch einen $C_1$- bis $C_4$-Alkylrest substituiert sein kann. Beispiele sind epsilon-Caprolacton, beta-Propiolacton, gamma-Butyrolacton und/oder Methylgamma-caprolacton sowie deren Gemische. Geeignete Starterkomponenten sind z. B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei den Diolen (b1) kann es sich auch um Polyetherdiole handeln. Polyetherdiole sind insbesondere durch Polymerisation von Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z. B. Wasser, Ethylenglykol, Propan-1,2-diol, Propan-1,3-diol, 2,2-Bis(4-hydroxyphenyl)-propan oder Anilin erhältlich. Besonders bevorzugt sind Polyetherdiole eines Molekulargewichts von 500 bis 5000, und vor allem 600 bis 4500. Besonders bevorzugte Polyetherdiole sind Polypropylenoxid und Polytetrahydrofuran. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt. Geeignete Verbindungen b1) sind auch alpha,omega-Diaminopolyether, die durch Aminierung von Polyalkylenoxiden mit Ammoniak herstellbar sind.

Unter $b_1$) fallen nur Polyetherdiole, die zu weniger als 20 Gew.-%, bezogen auf ihr Gesamtgewicht, aus Ethylenoxid bestehen. Polyetherdiole mit mindestens 20 Gew.-% eingebauten Ethylenoxideinheiten sind hydrophile Polyetherdiole, welche zu den Monomeren c) zählen.

Optional können als Monomere $b_1$) auch Polyhydroxyolefine mitverwendet werden, bevorzugt solche mit 2 endständigen Hydroxylgruppen, z. B. alpha-omega-Dihydroxypolybutadien, alpha-omega-Dihydroxypolymethacrylester oder alpha-omega-Dihydroxypolyacrylester als Monomere. Solche Verbindungen sind beispielsweise aus der EP-A 622 378 bekannt. Weitere geeignete Polyole sind Polyacetale, Polysiloxane und Alkydharze.

Bevorzugt handelt es sich bei mindestens 95 mol-% der Diole $b_1$) um Polyesterdiole und/oder Polytetrahydrofuran. Besonders bevorzugt werden als Diole $b_1$) ausschließlich Polyesterdiole und/oder Polytetrahydrofuran verwendet.

Die Härte und der Elastizitätsmodul der Polyurethane lassen sich erhöhen, wenn als Diole (b) neben den Diolen $b_1$) noch niedermolekulare Diole $b_2$) mit einem Molekulargewicht von etwa 60 bis 500, vorzugsweise von 62 bis 200 g/mol, eingesetzt werden. Als Monomere $b_2$) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden. Als Diole $b_2$) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Um die Wasserdispergierbarkeit der Polyurethane zu erreichen, enthalten die Polyurethane von den Komponenten (a) und (b) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Der Anteil der Komponenten mit (potentiell) hydrophilen Gruppen an der Gesamtmenge der Komponenten (a) bis (f) wird im allgemeinen so bemessen, dass die Molmenge der (potentiell) hydrophilen Gruppen (vorzugsweise anionischen oder potentiell anionischen Gruppen) bezogen auf die Gewichtsmenge aller Monomere (a) bis (e), 30 bis 1000, bevorzugt 50 bis 500 und besonders bevorzugt 80 bis 300 mmol/kg beträgt. Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im Allgemeinen 0 bis 10, bevorzugt 0 bis 6 Gew. %, bezogen auf die Gewichtsmenge aller Monomere (a) bis (e). Bevorzugte Monomere mit nichtionischen hydrophilen Gruppen sind Polyethylenoxiddiole mit mindestens 20 Gew. % Ethylenoxid, Polyethylenoxidmonoole sowie die Reaktionsprodukte aus einem Polyethylenglykol und einem Diisocyanat, die einen endständig veretherten Polyethylenglykolrest tragen. Derartige Diisocyanate sowie Verfahren zu deren Herstellung sind in den Patentschriften US-A 3,905,929 und US-A 3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen. Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z. B. Carbonsäuregruppen oder tertiäre Aminogruppen. (Potentiell) ionische Monomere (c) sind z. B. in Ullmanns Enzyklopädie der technischen Chemie, 4. Auflage, Band 19, S. 311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie z. B. durch Alkoxylierung von zwei an Aminstickstoff gebundene Wasserstoffatome aufweisende Amine, z. B. Methylamin, Anilin oder N,N'-Dimethylhydrazin, in an sich üblicher Weise zugänglich sind, in Betracht. Derartige Polyether weisen im Allgemeinen ein zwischen 500 und 6000 g/mol liegendes Molgewicht auf. Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden oder Benzylhalogeniden, z. B. Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 C-Atomen, wie sie auch in der US 3,412,054 beschrieben sind. Insbesondere sind Verbindungen der allgemeinen Formel ($c_1$)

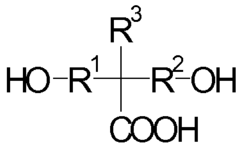 $(c_1)$

in welcher $R^1$ und $R^2$ für eine $C_1$- bis $C_4$-Alkandiyl-(Einheit) und $R^3$ für eine $C_1$- bis $C_4$-Alkyl-(Einheit) steht und vor allem Dimethylolpropionsäure (DMPA) bevorzugt. Weiterhin eignen sich entsprechende Dihydroxysulfonsäuren und Dihydroxyphosphonsäuren wie 2,3-Dihydroxypropanphosphonsäure. Ansonsten geeignet sind Dihydroxylverbindungen mit einem Molekulargewicht über 500 bis 10000 g/mol mit mindestens 2 Carboxylatgruppen, die aus der DE-A 39 11 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (b2) sowie die Diole (b1) geeignet.

Als Monomere (c) mit gegenüber Isocyanaten reaktiven Aminogruppen kommen auch Aminocarbonsäuren wie Lysin, beta-Alanin oder die in der DE-A 20 34 479 genannten Addukte von aliphatischen diprimären Diaminen an alpha,beta-ungesättigte Carbon- oder Sulfonsäuren in Betracht. Solche Verbindungen gehorchen beispielsweise der Formel $(c_2)$

$$H_2N\text{-}R^4\text{-}NH\text{-}R^5\text{-}X \quad (c_2)$$

in der $R^4$ und $R^5$ unabhängig voneinander für eine $C_1$- bis $C_6$-Alkandiyl-Einheit, bevorzugt für Ethylen; und X für COOH oder $SO_3H$ stehen. Besonders bevorzugte Verbindungen der Formel $(c_2)$ sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist. Weiterhin besonders bevorzugt sind die Addukte der oben genannten aliphatischen diprimären Diamine an 2-Acrylamido-2-methylpropansulfonsäure, wie sie z. B. in der DE-B 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Neutralisierungsmittel sind z. B. Ammoniak, NaOH, Triethanolamin (TEA) Triisopropylamin (TIPA) oder Morpholin, bzw. dessen Derivate. Besonders bevorzugt liegen die Sulfonat- oder Carboxylatgruppen in Form ihrer Salze mit einem Alkaliion oder einem Ammoniumion als Gegenion vor.

Die Monomere (d), die von den Monomeren (a) bis (c) verschieden sind und welche optional auch Bestandteile des Polyurethans sind, dienen im Allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z. B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z. B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyl-octan. Die Amine können auch in blockierter Form, z. B. in Form der entsprechenden Ketimine (siehe z. B. CA-A 1 129 128), Ketazine (vgl. z. B. die US-A 4,269,748) oder Aminsalze (siehe US-A 4,292,226) eingesetzt werden. Auch Oxazolidine, wie sie beispielsweise in der US-A 4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und

diese Mischung anschließend mit dem Dispersionswasser oder einem Teil des Dispersionswassers vermischt, so dass hydrolytisch die entsprechenden Polyamine freigesetzt werden. Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d). Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a'-dimethylbenzylisocyanat (TMI) und Ester von Acryl- oder Methacrylsäure wie Hydroxyethylacrylat oder Hydroxyethylmethacrylat.

Beschichtungen mit einem besonders guten Eigenschaftsprofil erhält man vor allem dann, wenn als Monomere (a) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA und IPDA als Komponente (d).

Bevorzugt sind auch Polyurethane, dadurch gekennzeichnet, dass die Diisocyanate a) ausgewählt sind aus Diisocyanaten der Formel $X(NCO)_2$, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht, vorzugsweise ausgewählt aus der Gruppe bestehend aus Hexamethylendiisocyanat, 1-Isocyanato-3,5,5-trimethyl-5-isocyanatomethylcyclohexan, 2,6-Diisocyanatotoluol, 2,4-Diisocyanatotoluol und Tetramethylxylylendiisocyanat oder deren Mischung;
die Diole b1) ausgewählt sind aus Polyesterdiolen, Polycarbonatdiolen und Polyetherdiolen; und die Verbindung c) ausgewählt ist aus Dihydroxycarbonsäuren, Diaminocarbonsäuren und Diaminosulfonsäuren.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (e) sowie ihre jeweiligen Molmengen so gewählt, dass das Verhältnis A : B mit

A der Molmenge an Isocyanatgruppen und
B der Summe aus der Molmenge der Hydroxylgruppen und der Molmenge der funktionellen Gruppen, die mit Isocyanaten in einer Additionsreaktion reagieren können,

0,5 : 1 bis 2 : 1, bevorzugt 0,8 : 1 bis 1,5 : 1, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt.

Unter einer wässrigen Polyurethandispersion wird im Rahmen der vorliegenden Erfindung eine Dispersion verstanden, die als kontinuierliche Phase ein wässriges Lösungsmittel aufweist. Geeignete wässrige Lösungsmittel sind Wasser und Gemische aus Wasser mit wassermischbaren Lösungsmitteln, beispielsweise Alkoholen, wie Methanol, Ethanol, n-Propanol, Isopropanol, n-Butanol, sek.-Butanol, tert.-Butanol, n-Hexanol und Cyclohexanol; Glykole, wie Ethylenglykol, Propylenglykol und Butylenglykol; die Methyl- oder Ethylether der zweiwertigen Alkohole, Diethylenglykol, Triethylenglykol, Polyethylenglykole mit zahlenmittleren Molekulargewichten bis etwa 3000, Glycerin und Dioxan sowie Ketone, wie insbesondere Aceton. In einer speziellen Ausführungsform ist die Polyurethandispersion im Wesentlichen frei von organischen Lösungsmitteln. Unter "im Wesentlichen frei von organischen Lösungsmitteln" wird dabei verstanden, dass der Anteil organischer Lösungsmittel höchstens 5 Gew.-%, besonders bevorzugt höchstens 1 Gew.-%, insbesondere höchstens 0,1 Gew.-%, bezogen auf das Gesamtgewicht des Lösungsmittels, beträgt.

Die Herstellung der Polyurethane erfolgt in einer bevorzugten Ausführung in Gegenwart wenigstens eines

organischen Lösungsmittels. Bevorzugte organische Lösungsmittel zur Herstellung der Polyurethane sind Ketone, wie Aceton und Methylethylketon, sowie N-Methylpyrrolidon. Besonders bevorzugt wird Aceton eingesetzt. Sofern zur Herstellung der Polyurethane ein zumindest teilweise wassermischbares Lösungsmittel eingesetzt wird, kann die erfindungsgemäße Polyurethandispersion neben Wasser das zur Herstellung eingesetzte organische Lösungsmittel enthalten. Selbstverständlich kann die Herstellung der erfindungsgemäßen Polyurethandispersionen in Gegenwart wenigstens eines organischen Lösungsmittels erfolgen und dieses anschließend teilweise oder vollständig gegen Wasser ausgetauscht werden.

Die wässrige Dispersionsklebstoffzusammensetzung enthält mindestens ein in der wässrigen Phase gelöstes Polyvinylpyrrolidon (Homopolymer aus Vinylpyrrolidon). Der Gehalt an Polyvinylpyrrolidon ist vorzugsweise so eingestellt, dass die Viskosität der Gesamtzusammensetzung bei 23 °C von 10 s bis 30 s, besonders bevorzugt von 11 s bis 27 s oder von 12 s bis 26 s oder von 13 s bis 20 s beträgt, gemessen mit DIN-Auslaufbecher Nr. 4 nach DIN EN ISO 2431:2011. Der Gehalt an Polyvinylpyrrolidon kann z.B. von 0,02 bis 2 Gew.%, oder von 0,04 bis 1,6 Gew.%, besonders bevorzugt von 0,04 bis 1,2 Gew.% betragen, bezogen auf die Gesamtmenge an Dispersionsklebstoffzusammensetzung.

Das Polyvinylpyrrolidon weist vorzugsweise einen K-Wert von 25 bis 100, besonders bevorzugt von 80 bis 98 auf, gemessen bei 25 °C als 1%ige Lösung in Wasser.

Der pH-Wert der Klebstoffpolymerdispersion wird vorzugsweise auf pH größer 5, insbesondere auf einen pH-Wert zwischen 5,5 und 8 eingestellt.

Bevorzugte Dispersionsklebstoffzusammensetzungen haben eine Viskosität von 12 s bis 26 s, besonders bevorzugt von 13 s bis 20 s bei 23 °C, gemessen mit DIN-Auslaufbecher Nr. 4 nach DIN EN ISO 2431:2011.

Bevorzugte Dispersionsklebstoffzusammensetzungen weisen im Billhöfer-Schaumtest (siehe Beispiele) gemessen bei 250 m/min, einen Wert von größer 120 Minuten auf.

Bei dem erfindungsgemäßen Verfahren können die mit Klebstoff beschichteten Artikel beispielsweise ausgewählt sein aus Laminaten und Haftklebstoffartikeln, vorzugsweise in Verfahren zum Verkleben von großflächigen Substraten. Vorzugsweise handelt es sich um Verbundfolien, wobei mindestens zwei Folien unter Verwendung der wässrigen Dispersionsklebstoffzusammensetzung miteinander verklebt werden.

Für Anwendungen in Laminier- bzw. Kaschierverfahren ist der Laminierklebstoff vorzugsweise nicht selbstklebend. Nicht selbstklebende Klebstoffe sind Klebstoffe, die im Unterschied zu Haftklebstoffen keine oder nur eine sehr geringe Klebrigkeit bei Raumtemperatur aufweisen und vorzugsweise unter Anwendung von Druck und/oder erhöhter Temperatur angewendet werden. Die Klebrigkeit gemessen als Loop Tack beträgt vorzugsweise weniger als 1,7 N/25 mm (Klebstoff in einer Auftragsstärke von 20 µm aufgetragen auf einer 12 µm starken Polyesterfolie, gemessen auf Stahl bei Raumtemperatur (20 °C) mit einer Abzugsgeschwindigkeit von 300 mm/min).

Für Anwendungen zur Herstellung von Haftklebstoffartikeln hat die Dispersionsklebstoffzusammensetzung haftklebrige Eigenschaften. Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Der Loop Tack beträgt vorzugsweise mehr als 1,7 N/25 mm besonders bevorzugt mehr als 2 N/25 mm (Klebstoff in einer Auftragsstärke von 20 µm aufgetragen auf einer 12 µm starken Polyesterfolie, gemessen auf Stahl bei Raumtemperatur (20 °C) mit einer Abzugsgeschwindigkeit von 300 mm/min).

Die wässrigen Dispersionsklebstoffzusammensetzungen können als solche oder nach Konfektionierung mit üblichen Hilfsstoffen eingesetzt werden. Übliche Hilfsstoffe sind beispielsweise Füllstoffe, Farbstoffe, Verlaufsmittel, Verdicker, vorzugsweise Assoziativverdicker, zusätzliche Entschäumer, Vernetzer, Weichmacher, Pigmente, Lichtschutzstabilisatoren, Biozide, Tackifier oder Netzmittel. Für eine bessere Benetzung von Oberflächen können insbesondere Benetzungshilfsmittel (Netzmittel), z. B. Fettalkoholethoxylate, Alkylphenolethoxylate, Nonylphenolethoxylate, Polyoxyethylene/-propylene oder Natriumdodecylsulfonate enthalten sein. Die Menge an Zusatzstoffen beträgt vorzugsweise 0,05 bis 5 Gew.-Teile, insbesondere 0,1 bis 3 Gew.-Teile auf 100 Gew.-Teile Polymer (fest). Die Dispersionsklebstoffzusammensetzungen benötigen nicht unbedingt den Zusatz an zusätzlichen Entschäumern, da ihr besonderer Vorteil darin besteht, beim Auftragen auf Substrate besonders schaumarm zu sein. Daher ist die Dispersionsklebstoffzusammensetzung vorzugsweise frei von üblicherweise eingesetzten Entschäumern wie z.B. frei von Entschäumern auf Silikonbasis oder frei von Entschäumern auf Basis von organischen Ölen.

Insbesondere für die Herstellung von Haftklebstoffartikeln kann die Dispersionsklebstoffzusammensetzung mindestens einen Tackifier (klebrigmachende Harze) in einer Menge von vorzugsweise 5 bis 40 Gewichtsteilen, bezogen auf 100 Gewichtsteile Klebstoffpolymer enthalten. Ein Tackifier ist ein polymerer oder oligomerer Zusatzstoff für Klebstoffpolymere oder allgemein für Elastomere der deren Autoadhäsion (Tack, Eigenklebrigkeit, Selbsthaftung) erhöht, sodass sie nach kurzem leichten Andruck fest auf Oberflächen haften. Tackifier sind z.B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des Weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, alpha-Methylstyrol, Vinyltoluol Verwendung. Tackifier sind z.B. aus Adhesive Age, Juli 1987, Seite 19-23 oder Polym. Mater. Sci. Eng. 61 (1989), Seite 588-592 bekannt. Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 50000, insbesondere unter 30 000. Die Polyacrylate bestehen bevorzugt zu mindestens 60, insbesondere mindestens 80 Gew.-% aus $C_1$-$C_8$ Alkyl(meth)-acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich -40 °C bis kleiner oder gleich 0 °C, vorzugsweise von größer oder gleich -35 °C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1-bis C20-Alkyl(meth)acrylats. Geeignete Tackifier können auch in-situ in Gegenwart des dispergierten Klebstoffpolymers hergestellt werden, insbesondere wie in WO 2013/117428 beschrieben.

Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Vorzugsweise enthält die Dispersionsklebstoffzusammensetzung für Haftklebstoffanwendungen 60 - 95 Gewichtsteile Haftklebstoffpolymer,

5-40 Gewichtsteile Tackifier und
optional 0 - 10 Gewichtsteile weitere Bestandteile wie z.B. die oben genannten Netzmittel, Verdicker, Entschäumer, Vernetzer, etc..

Bei der Auftragung der wässrigen Dispersionsklebstoffzusammensetzungen auf Folien mittels einer Beschichtungsmaschine mit mindestens einer rotierenden Walze können bekannte Beschichtungsverfahren angewendet werden, wie z.B. Walzenstreichen, Gegenlaufwalzenstreichen, Gravurwalzenstreichen, Gegenlaufgravurwalzenstreichen. Die Bahngeschwindigkeit des Foliensubstrats beträgt mindestens 150 m/min, vorzugsweise mindestens 200 m/min, z. B. von 200 bis 400 m/min.

Bei dem Verfahren zur Herstellung von Verbundfolien werden mindestens zwei Folien unter Verwendung der wässrigen Dispersionsklebstoffzusammensetzung miteinander verklebt. Dabei wird die Dispersionsklebstoffzusammensetzung oder eine entsprechend konfektionierte Zubereitung auf die zu verklebenden, großflächigen Substrate vorzugsweise mit einer Schichtdicke von 0,1 bis 20 g/$m^2$, besonders bevorzugt 1 bis 7 g/$m^2$ aufgetragen. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 kN/$m^2$, vorzugsweise 300 bis 2000 kN/$m^2$ betragen kann.

Bei dem erfindungsgemäßen Verfahren zur Verbundfolienkaschierung werden mindestens zwei Folien mit der wässrigen Dispersionsklebstoffzusammensetzung vorzugsweise derart miteinander verklebt, dass die Schälfestigkeit (nach 24h, bei 23°C / 50% rel. Luftfeuchte) vorzugsweise 2,5 N / 15 mm oder mehr oder 3 N /15 mm oder mehr beträgt oder dass die miteinander verklebten Folien nur unter Zerstörung mindestens einer der Folien trennbar sind.

Bei dem erfindungsgemäßen Verfahren kann wenigstens eine der Folien auf der mit der Dispersionsklebstoffzusammensetzung beschichteten Seite bedruckt oder metallisiert sein. Als Foliensubstrate eignen sich z.B. Polymerfolien, insbesondere aus thermoplastischen Polyolefinen (TPO) wie Polyethylen (PE), Polypropylen (PP), z.B. orientiertes, vorzugsweise biaxial gerecktes Polypropylen (OPP) oder ungerecktes Polypropylen (CPP), Ethylen/Vinylacetat Copolymere (EVA), ASA (Acrylnitril/Styrol/Acrylsäureester Copolymere), PUR (Polyurethan), Polyamid (PA), Polyester, vorzugsweise Polyethylenterephthalat (PET), Polyvinylchlorid (PVC) insbesondere Weich-PVC, Polyacetat, Poly(meth)acrylate, Polycarbonate oder deren Kunststofflegierungen, Celluloseacetat, Zellglas, mit Metall, z. B. Aluminium, beschichtete (bedampfte) Polymerfolien (kurz : metallisierte Folien) wie z.B. metallisierte Polyolefinfolien oder metallisierte Polyesterfolien oder Metallfolien, z. B. aus Zinn oder Aluminium. Das Foliensubstrat ist bevorzugt ausgewählt ist aus der Gruppe bestehend aus Polyethylen, orientiertem Polypropylen, ungerecktem Polypropylen, Polyamid, Polyethylenterephthalat, Polyacetat, Zellglas, metallisierten Folien und Metallfolien. Die Polymerfolien, insbesondere Polyolefinfolien, können gegebenenfalls coronavorbehandelt sein.

Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein. Die Dicke der Foliensubstrate kann beispielsweise von 5 bis 100 $\mu$m, vorzugsweise von 5 bis 40 $\mu$m betragen.

Im Falle von Verbundfolien ist beispielsweise das Material einer ersten Folie ausgewählt aus OPP, CPP, PE,

PET und PA und das Material einer zweiten Folie ausgewählt aus OPP, CPP, PE, PET, PA und Metallfolie. In einer Ausführungsform der Erfindung ist die erste Folie und/oder die zweite Folie auf der jeweiligen Seite, welche mit der Dispersionsklebstoffzusammensetzung beschichtet wird, bedruckt oder metallisiert.

Die erfindungsgemäß erhältlichen Verbundfolien eignen sich insbesondere für die Herstellung von flexiblen Verpackungen, z.B. zur Verpackung von Lebensmitteln.

Eine Oberflächenbehandlung der Foliensubstrate ist vor der Beschichtung mit einer Dispersionsklebstoffzusammensetzung nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden zur Verstärkung der Haftwirkung, z. B. Primer, Plasmabehandlung oder Coronabehandlung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Geeignete Auftragsgewichte sind beispielsweise

Zur Verbundfolienherstellung:

von 0,1 bis 20 g, besonders bevorzugt 1 bis 6 g Feststoff pro $m^2$

Für sonstige technische Kaschierungen:

von 0,5 bis 100 g, bevorzugt von 2 bis 80 g, ganz besonders bevorzugt von 10 bis 70 g Feststoff pro $m^2$

Zur Herstellung von Haftklebstoffartikeln:

von 0,1 bis 300 g, besonders bevorzugt von 2 bis 150 g Feststoff pro $m^2$.

Das Verfahren kann zur Herstellung von selbstklebenden Artikeln verwendet werden. Die Artikel sind zumindest teilweise mit dem Haftklebstoff beschichtet. Die Klebeeigenschaften können so eingestellt werden, dass die selbstklebenden Artikel nach der Verklebung wiederabziehbar sind. Bei den selbstklebenden Artikeln kann es sich z. B. um Klebeetiketten, Klebebänder oder Klebefolien handeln. Geeignete Trägermaterialien sind z. B. Papier, Kunststofffolien und Metallfolien. Bei erfindungsgemäßen selbstklebenden Bändern kann es sich um einseitig oder beidseitig beschichtete Bänder aus den obigen Substanzen handeln. Bei selbstklebenden Etiketten kann es sich um Etiketten aus Papier oder einer thermoplastischen Folie handeln. Besonders bevorzugt sind Klebebänder aus thermoplastischer Folie. Als thermoplastische Folie kommen z. B. Folien aus Polyolefinen (z. B. Polyethylen, Polypropylen), Polyolefincopolymeren, Folien aus Polyestern (z. B. Polyethylenterephthalat), Polyvinylchlorid oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien.

Die selbstklebenden Artikel sind auf mindestens einer Oberfläche zumindest teilweise mit einem Haftklebstoff beschichtet. Nach dem Auftragen folgt im Allgemeinen ein Trocknungsschritt zur Entfernung des Wasser bzw. der Lösungsmittel. Das Wasser kann durch Trocknung bei z. B. 50 bis 150°C entfernt werden. Die so erhaltenen, beschichteten Substrate werden z.B. als Selbstklebeartikel, wie Klebeetiketten, Klebebänder oder Klebefolien verwendet. Die Träger können hierzu vor oder nach dem Aufbringen des Klebstoffs zu Klebebändern, Klebeetiketten oder Klebefolien geschnitten werden. Zur späteren Verwendung kann die mit Haftklebstoff beschichtete Seite der Substrate, mit einem Releasepapier, z. B. mit einem silikonisierten Papier, abgedeckt werden. Bei den Substraten, auf welche die selbstklebenden Artikel vorteilhaft aufgebracht werden können, kann es sich z. B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Dampfsperren, Kraftfahrzeugkarosserien, Reifen oder Karosserieteilen.

Das erfindungsgemäße Verfahren kann außer bei der Verbundfolienkaschierung auch bei weiteren technischen Kaschierverfahren eingesetzt werden, z. B. zur Herstellung von Automobilinnenteilen, zur Möbelkaschierung und zur Glanzfolienkaschierung. Als zu verklebende Substrate kommen dann z. B. solche aus Holz, Metall, Kunststoff, Leder, Faserformteilen, z. B. MDF-Platten, oder Papier in Betracht. Bei der Glanzfolienkaschierung werden transparente Polymerfolien mit Papiersubstraten verklebt.

Bei der Verwendung für die Oberflächenveredlung eines festen Trägers mit einer erfindungsgemäß beschichteten Foliensubstrat, z. B. einer Dekorationsfolie, wird das Foliensubstrat, welches erfindungsgemäß beschichtet ist, beispielsweise mit Gegenständen aus Holz, worunter auch gebundene Holzfasermaterialien wie Spanplatten oder sonstige Platten aus Zellulosematerialien verstanden werden, Metall oder Kunststoff verklebt. Zum Beispiel werden Möbel, bzw. Möbelteile mit dem beschichteten Foliensubstrat kaschiert oder es werden Automobilinnenteile mit dem beschichteten Foliensubstrat aus z. B. PVC oder TPO kaschiert. Besonders eignen sich Polyurethandispersionen als Klebstoff für die Kaschierung von starren Formkörpern mit flexiblen Dekorationsfolien.

Besondere Vorteile des erfindungsgemäßen Verfahrens sind insbesondere:

- keine oder nur sehr gering Schaumentwicklung beim Beschichten, auch ohne Verwendung von silikonbasierten oder ölbasierten Entschäumern
- lebensmittelrechtliche Konformität
- keine Reaktion (kein Viskositätsanstieg) mit Isocyanatvernetzern
- verbesserte optische Eigenschaften (z.B. weniger oder keine Filmtrübung)
- für eine maschinelle Beschichtung gut geeignete rheologische Eigenschaften der Dispersionsklebstoffzusammensetzung
- gute Schälfestigkeiten bei der Verbundfolienkaschierung

Beispiele

Einsatzstoffe:

| | |
|---|---|
| Dispersion A: | wässrige Styrol/Acrylat-Polymerdispersion eines Klebstoffpolymers auf Basis von n-Butylacrylat, Styrol und Acrylsäure; Feststoffgehalt 46%; Glasübergangstemperatur +7°C. |
| Epotal® FLX 3628 X | ca. 53%ige wässrige Acrylatpolymerdispersion eines Klebstoffpolymers auf Basis von Acrylsäureestern und Methacrylsäureestern |
| Epotal® FLX 3621 | ca. 53%ige wässrige Polyurethandispersion eines Klebstoffpolymers auf Basis eines Polyether-polyurethan Elastomers |
| Luvitec® K90: | Polyvinylpyrrolidon mit einem K-Wert von 88,0 bis 92,0 (gemessen als 1%ige Lösung bei 25°C in Wasser), eingesetzt als 20%ige Lösung in Wasser |
| Luvitec® K30: | Polyvinylpyrrolidon mit einem K-Wert von 27,0 - 33,0... (gemessen als 1%ige Lösung bei 25 °C in Wasser), eingesetzt als 20%ige Lösung in Wasser |
| Tego® Antifoam 2291: | Entschäumer auf Basis von Paraffinöl |
| Basonat® LR 9056 | Vernetzer auf Basis eines Hexamethylendiisocyanat-Isocyanurats |

Beispiele 1 - 14

Die Zusammensetzung der Beispiele und die Ergebnisse des Billhöfer-Schaumtests sind in Tabelle 1 zusammengefasst.

Die Viskosität wurde gemessen mit DIN-Auslaufbecher Nr. 4 nach DIN EN ISO 2431:2011.

Tabelle 1: Zusammensetzung der Dispersionsklebstoffzusammensetzungen, Schaumtests

| Beispiel | Polymerdispersion 100 Gew.-teile | Gew.-Teile Additive | FG [1)] [Gew. %] | Viskosität [s] | Schaumtest [min] |
|---|---|---|---|---|---|
| 1 | Dispersion A | 0,2 Tego® Antifoam 2291<br>4 Luvitec® K90. | 45,6 | 19,5 | > 120 |
| 2 | Dispersion A | 0,2 Tego® Antifoam 2291<br>4 Luvitec® K90<br>5 Basonat® LR 9056 | 48,1 | 26,5 | > 120 |
| 3 [2)] | Dispersion A | 0,2 Tego® Antifoam 2291 | 46,6 | 12,5 | 90 |
| 4 | Dispersion A | 4 Luvitec® K90 | 45,6 | 19,5 | > 120 |
| 5 [2)] | Dispersion A | - | 46,6 | 12,5 | 6 |
| 6 | Dispersion A | 2 Luvitec® K90 | 46,1 | 15,0 | > 120 |
| 7 | Dispersion A | 1 Luvitec® K90 | 46,3 | 14,0 | > 120 |
| 8 | Dispersion A | 4 Luvitec® K30 | 45,6 | 14,0 | 62 |
| 9 [2)] | Epotal® FLX 3628 X | - | 46,0 | 13,5 | 4 |

(fortgesetzt)

| Beispiel | Polymerdispersion 100 Gew.-teile | Gew.-Teile Additive | FG 1) [Gew. %] | Viskosität [s] | Schaumtest [min] |
|---|---|---|---|---|---|
| 10 | Epotal® FLX 3628 X | 2 Luvitec® K90 | 45,5 | 17,5 | 18 |
| 11 2) | Epotal® FLX 3628 X | 0,2 Tego® Antifoam 2291 | 46,0 | 13,5 | 53 |
| 12 2) | Epotal® FLX 3621 | - | 45,0 | 12,5 | 2 |
| 13 | Epotal® FLX 3621 | 0,2 Luvitec® K90 | 45,0 | 19,0 | 23 |
| 14 2) | Epotal® FLX 3621 | 0,2 Tego® Antifoam 2291 | 45,0 | 12,5 | > 120 |
| 1) Feststoffgehalt 2) Vergleich | | | | | |

Die Ergebnisse zeigen für die erfindungsgemäßen Beispiele (mit Polyvinylpyrrolidon) eine deutlich geringere Neigung zur Schaumbildung als für die nicht erfindungsgemäßen Beispiele ohne Polyvinylpyrrolidon.

Anwendungstechnische Prüfungen:

Billhöfer-Schaumtest

Das Schaumprüfgerät besteht aus einem Vorratsgefäß mit einem Volumen von 1000 ml, einer Glattwalze von 100 mm Durchmesser, die ca. 10 mm in die Prüfdispersion eintaucht, und einem Kunststoffrakel. 500ml der zu testenden Polymerdispersion werden bei Raumtemperatur in das Vorratsgefäß gegeben. Zum Zeitpunkt x=0 min wird die Glattwalze mittels Motor auf eine Umdrehungsgeschwindigkeit von 250 U/min eingestellt. Das Testende ist erreicht sobald die ersten Mengen der Testdispersion den Rand des Vorratsgefäßes überschreiten, spätestens jedoch nach 120 min. Das Ergebnis wird angegeben in Minuten der Testdauer.

## Patentansprüche

1. Verfahren zur Herstellung von mit Klebstoff beschichteten Artikeln, wobei eine wässrige Dispersionsklebstoffzusammensetzung, enthaltend

    (a) mindestens ein in der wässrigen Phase dispergiertes Klebstoffpolymer und
    (b) mindestens ein in der wässrigen Phase gelöstes Polyvinylpyrrolidon,

    auf ein Foliensubstrat mittels einer Beschichtungsmaschine mit mindestens einer rotierenden Walze aufgetragen wird, wobei die Bahngeschwindigkeit des Foliensubstrats größer oder gleich 150 m/min, vorzugsweise größer oder gleich 200 m/min beträgt, und wobei das beschichtete Foliensubstrat optional mit einem weiteren Substrat verklebt wird.

2. Verfahren gemäß dem vorhergehenden Anspruch, **dadurch gekennzeichnet, dass** die mit Klebstoff beschichteten Artikel ausgewählt sind aus Laminaten und Haftklebstoffartikeln.

3. Verfahren gemäß einem der vorhergehenden Ansprüche, **dadurch gekennzeichnet, dass** die Artikel Verbundfolien sind, wobei mindestens zwei Folien unter Verwendung der wässrigen Dispersionsklebstoffzusammensetzung miteinander verklebt werden.

4. Verfahren gemäß einem der vorhergehenden Ansprüche, **dadurch gekennzeichnet, dass**
    die Dispersionsklebstoffzusammensetzung im Billhöfer-Schaumtest, gemessen wie in der Beschreibung offenbart bei 250 m/min, einen Wert von größer 120 Minuten aufweist.

5. Verfahren nach einem der vorhergehenden Ansprüche, **dadurch gekennzeichnet, dass** das Polyvinylpyrrolidon einen K-Wert von 25 bis 100 aufweist, gemessen bei 25 °C als 1%ige Lösung in Wasser.

6. Verfahren nach einem der vorhergehenden Ansprüche, **dadurch gekennzeichnet, dass** die Dispersionsklebstoffzusammensetzung

(i) von 30 bis 60 Gew.% des mindestens einen Klebstoffpolymers und
(ii) von 0,02 bis 2 Gew.% des Polyvinylpyrrolidons enthält.

**7.** Verfahren gemäß einem der vorhergehenden Ansprüche, **dadurch gekennzeichnet, dass** das Klebstoffpolymer eine Glasübergangstemperatur von -40 bis +15 °C, vorzugsweise von -10 bis +10 °C aufweist, gemessen durch Differential Scanning Calorimetrie mit einer Heizrate von 20° C/min.

**8.** Verfahren nach einem der vorhergehenden Ansprüche, **dadurch gekennzeichnet, dass** die Dispersionsklebstoffzusammensetzung

(i) mindestens ein in der wässrigen Phase dispergiertes Klebstoffpolymer und
(ii) in der wässrigen Phase gelöstes Polyvinylpyrrolidon

enthält, wobei das Klebstoffpolymer ausgewählt ist aus Polyurethanen und Polymeren, die herstellbar sind durch radikalische Emulsionspolymerisation von ethylenisch ungesättigten, radikalisch polymerisierbaren Monomeren umfassend

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe, vorzugsweise ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat, Sulfopropylmethacrylat und Mischungen dieser Monomere;
c) optional mindestens einem weiteren, von den Monomeren a) und b) verschiedenen Monomer.

**9.** Verfahren nach einem der vorhergehenden Ansprüche, **dadurch gekennzeichnet, dass** die Dispersionsklebstoffzusammensetzung als Klebstoffpolymer mindestens ein Polyurethan enthält, welches aufgebaut ist aus

a) wenigstens einem monomeren Diisocyanat,
b) wenigstens einem Diol, von dem

b1) 10 bis 100 mol-%, bezogen auf die Gesamtmenge der Diole (b), ein Molekulargewicht von 500 bis 5000 g/mol aufweisen, und
b2) 0 bis 90 mol-%, bezogen auf die Gesamtmenge der Diole (b), ein Molekulargewicht von 60 bis 500 g/mol aufweisen,

c) wenigstens einem von den Monomeren (a) und (b) verschiedenen Monomer mit wenigstens einer Isocyanatgruppe oder wenigstens einer gegenüber Isocyanatgruppen reaktiven Gruppe, das darüber hinaus wenigstens eine hydrophile Gruppe oder eine potentiell hydrophile Gruppe trägt, und
d) optional wenigstens einer weiteren, von den Monomeren (a) bis (c) verschiedenen Verbindung mit wenigstens zwei reaktiven Gruppen, die ausgewählt sind unter alkoholischen Hydroxylgruppen, primären oder sekundäre Aminogruppen oder Isocyanatgruppen, und
e) optional wenigstens einer von den Monomeren (a) bis (d) verschiedenen einwertigen Verbindung mit einer reaktiven Gruppe, bei der es sich um eine alkoholische Hydroxylgruppe, eine primäre oder sekundäre Aminogruppe oder eine Isocyanatgruppe handelt.

**10.** Verfahren nach dem vorhergehenden Anspruch, **dadurch gekennzeichnet, dass** die Diisocyanate a) ausgewählt sind aus Diisocyanaten der Formel $X(NCO)_2$, wobei X für einen nicht-cyclischen aliphatischen Kohlenwasserstoffrest mit 4 bis 15 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder für einen araliphatischen Kohlenwasserstoffrest mit 7 bis 15 Kohlenstoffatomen steht, vorzugsweise ausgewählt aus der Gruppe bestehend aus Hexamethylendiisocyanat, 1-Isocyanato-3,5,5-trimethyl-5-isocyanatomethylcyclohexan, 2,6-Diisocyanatotoluol, 2,4-Diisocyanatotoluol und Tetramethylxylylendiisocyanat oder deren Mischung;
die Diole b1) ausgewählt sind aus Polyesterdiolen, Polycarbonatdiolen und Polyetherdiolen; und die Verbindung c)

ausgewählt ist aus Dihydroxycarbonsäuren, Diaminocarbonsäuren und Diaminosulfonsäuren.

**11.** Verfahren nach einem der Ansprüche 9 bis 10, **dadurch gekennzeichnet, dass** der Gehalt an anionischen oder potentiell anionischen Gruppen im Polyurethan 30 bis 1000 mmol/kg Polyurethan beträgt.

**12.** Verfahren nach einem der Ansprüche 1 bis 8, **dadurch gekennzeichnet, dass** die Dispersionsklebstoffzusammensetzung als Klebstoffpolymer mindestens ein Polymer enthält, das herstellbar ist durch radikalische Emulsionspolymerisation von ethylenisch ungesättigten, radikalisch polymerisierbaren Monomeren umfassend

a) 60 bis 99,9 Gew.%, bezogen auf die Gesamtmenge an Monomeren, mindestens eines Monomeren ausgewählt aus der Gruppe bestehend aus C1- bis C20-Alkylacrylaten, C1-bis C20-Alkylmethacrylaten, Vinylaromaten mit bis zu 20 C-Atomen, und
b) 0,1 bis 5 Gew.%, bezogen auf die Gesamtmenge an Monomeren, mindestens eines Monomeren mit mindestens einer Säuregruppe, ausgewählt aus Acrylsäure, Methacrylsäure und Itaconsäure und
c) 0 bis 10 Gew.%, bezogen auf die Gesamtmenge an Monomeren, an weiteren, von den Monomeren a) bis b) verschiedenen Monomeren, ausgewählt aus der Gruppe bestehend aus Acrylamid, Methacrylamid, N-Methylolacrylamid, N-Methylolmethacrylamid, Phenyloxyethylglykolmono(meth)acrylat, Hydroxylgruppen enthaltende Monomere, Aminogruppen enthaltende Monomere, Nitrile alpha,beta-monoethylenisch ungesättigter C3-C8-Carbonsäuren, bifunktionelle Monomere, die neben einer ethylenisch ungesättigten Doppelbindung wenigstens eine Glycidylgruppe, Oxazolingruppe, Ureidogruppe oder ureido-analoge Gruppe aufweisen und vernetzende Monomere, welche mehr als eine radikalisch polymerisierbare Gruppe aufweisen.

**13.** Verfahren nach einem der Ansprüche 8 und 12, **dadurch gekennzeichnet, dass** die Monomere a) ausgewählt sind aus C1- bis C10-Alkylacrylaten, C1- bis C10-Alkylmethacrylaten und Styrol.

**14.** Verfahren nach einem der Ansprüche 8 und 12 bis 13, **dadurch gekennzeichnet, dass** die Monomere a) in einer Menge von mindestens 80 Gew.%, bezogen auf die Gesamtmenge der Monomere, eingesetzt werden und ausgewählt sind aus der Gruppe bestehend aus C1-bis C10-Alkylacrylaten, C1- bis C10-Alkylmethacrylaten, Styrol und deren Gemisch; und die Monomer b) in einer Menge von 0,5 bis 5 Gew.%, bezogen auf die Gesamtmenge der Monomere, eingesetzt werden und ausgewählt sind aus der Gruppe bestehend aus Acrylsäure, Methacrylsäure, Itaconsäure und deren Gemisch.

**15.** Verfahren nach einem der Ansprüche 1 bis 8 und 12 bis 14, **dadurch gekennzeichnet, dass** das in der wässrigen Phase dispergiertes Klebstoffpolymer ein Styrol/Acrylat Copolymer ist, gebildet aus einem Monomerengemisch enthaltend Styrol und mindestens ein Monomer ausgewählt aus C1- bis C20-Alkylacrylaten und C1- bis C20-Alkylmethacrylaten.

**16.** Verfahren nach einem der Ansprüche 1 bis 8 und 12 bis 15, **dadurch gekennzeichnet, dass** die Dispersionsklebstoffzusammensetzung in Wasser dispergierte Polymerpartikel enthält mit einem mittleren Teilchendurchmesser von größer 200 nm, vorzugsweise größer 250 nm, wobei die Polymerpartikel eine monomodale Teilchengrößenverteilung und eine einheitliche Glasübergangstemperatur aufweisen,

hergestellt durch radikalische Emulsionspolymerisation einer einzigen Monomerenmischung enthaltend ethylenisch ungesättigte, radikalisch polymerisierbare Monomere, unter Verwendung einer Polymersaat,
weniger als 0,8 Gewichtsteile Emulgator, bezogen auf 100 Gewichtsteile Monomere, ohne Zusatz von Schutzkolloiden und ohne in-situ Bildung von Schutzkolloiden,
wobei die Monomerenmischung besteht aus

a) mindestens 60 Gew.%, bezogen auf die Gesamtmenge an Monomeren, mindestens eines Monomeren ausgewählt aus der Gruppe bestehend aus C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere,
b) mindestens 0,1 Gew.-%, bezogen auf die Gesamtmenge an Monomeren, mindestens eines Monomeren mit mindestens einer Säuregruppe;
c) optional mindestens einem weiteren, von den Monomeren a) und b) verschiedenen Monomer;

wobei der Zulauf der Monomerenmischung während der Polymerisation mit einer ersten und mit mindestens

einer zweiten Zulaufgeschwindigkeiten erfolgt, wobei die erste Zulaufgeschwindigkeit vorzugsweise langsamer als die zweite Zulaufgeschwindigkeit ist und wobei die Säuregruppen der Monomere b) während der Emulsionspolymerisation ganz oder teilweise durch Zulauf einer Base neutralisiert werden, wobei der Zulauf der Base während der Emulsionspolymerisation beginnt nachdem mindestens 5 Gew.%, vorzugsweise 10 bis 70 Gew.% der gesamten Monomerenmischung im Reaktionsgefäß unter Polymerisationsbedingungen vorliegen.

**17.** Verfahren nach einem der vorhergehenden Ansprüche, **dadurch gekennzeichnet, dass** die Dispersionsklebstoffzusammensetzung mindestens ein in der wässrigen Phase dispergiertes vernetzbares Klebstoffpolymer und mindestens einen reaktiven Vernetzer enthält.

**18.** Verfahren nach dem vorhergehenden Anspruch, **dadurch gekennzeichnet, dass** der Vernetzer ein Polyisocyanat ist.

**19.** Verfahren gemäß dem vorhergehenden Anspruch, **dadurch gekennzeichnet, dass** das Material des Foliensubstrats ausgewählt ist aus der Gruppe bestehend aus Polyethylen, orientiertem Polypropylen, ungerecktem Polypropylen, Polyamid, Polyethylenterephthalat, Polyacetat, Zellglas, metallisierten Folien und Metallfolien.

**20.** Verfahren gemäß einem der vorhergehenden Ansprüche, **dadurch gekennzeichnet, dass** Dispersionsklebstoffzusammensetzung frei ist von Entschäumern auf Silikonbasis und/oder frei von Entschäumern auf Basis organischer Öle.

**21.** Verwendung einer wässrigen Dispersionsklebstoffzusammensetzung enthaltend

(a) mindestens ein in der wässrigen Phase dispergiertes Klebstoffpolymer und
(b) in der wässrigen Phase gelöstes Polyvinylpyrrolidon

zur Herstellung von maschinell mit der Dispersionsklebstoffzusammensetzung beschichteten Folien, vorzugsweise zur Herstellung von Verbundfolien, oder für die Kaschierung von starren Formkörpern mit maschinell mit der Dispersionsklebstoffzusammensetzung beschichteten flexiblen Dekorationsfolien, wobei die wässrige Dispersionsklebstoffzusammensetzung auf ein Foliensubstrat mittels einer Beschichtungsmaschine mit mindestens einer rotierenden Walze aufgetragen wird, wobei die Bahngeschwindigkeit des Foliensubstrats mindestens 150 m/Minute beträgt.

**22.** Verwendung von Polyvinylpyrrolidon als Entschäumer für wässrige Dispersionsklebstoffzusammensetzungen, die auf ein Foliensubstrat mittels einer Beschichtungsmaschine mit mindestens einer rotierenden Walze aufgetragen werden, wobei die Bahngeschwindigkeit des Foliensubstrats mindestens 150 m/Minute beträgt.

## Claims

**1.** A process for producing adhesive-coated articles, wherein an aqueous dispersion adhesive composition comprising

(a) at least one adhesive polymer dispersed in the aqueous phase and
(b) at least one polyvinylpyrrolidone dissolved in the aqueous phase

is applied to a film substrate using a coating machine with at least one rotating roller, wherein the web speed of the film substrate is not less than 150 m/min, preferably not less than 200 m/min, and wherein the coated film substrate is optionally bonded to a further substrate.

**2.** The process according to the preceding claim, wherein the adhesive-coated articles are selected from laminates and pressure-sensitive adhesive articles.

**3.** The process according to either of the preceding claims, wherein the articles are composite films, wherein at least two films are bonded to one another using the aqueous dispersion adhesive composition.

**4.** The process according to any of the preceding claims, wherein in the Billhofer foam test as disclosed in the description and measured at 250 m/min the dispersion adhesive composition exhibits a value of greater than 120 minutes.

**5.** The process according to any of the preceding claims, wherein the polyvinylpyrrolidone has a K value of 25 to 100

measured at 25°C as a 1% solution in water.

6. The process according to any of the preceding claims, wherein the dispersion adhesive composition comprises

(i) from 30% to 60% by weight of the at least one adhesive polymer and
(ii) from 0.02% to 2% by weight of the polyvinylpyrrolidone.

7. The process according to any of the preceding claims, wherein the adhesive polymer has a glass transition temperature of -40°C to +15°C, preferably of -10°C to +10°C, measured by differential scanning calorimetry at a heating rate of 20°C/min.

8. The process according to any of the preceding claims, wherein the dispersion adhesive composition comprises

(i) at least one adhesive polymer dispersed in the aqueous phase and
(ii) polyvinylpyrrolidone dissolved in the aqueous phase,

wherein the adhesive polymer is selected from polyurethanes and polymers producible by free-radical emulsion polymerization of ethylenically unsaturated, free-radically polymerizable monomers comprising

a) at least 60% by weight, based on the total amount of monomers, of at least one monomer selected from the group consisting of C1- to C20-alkyl acrylates, C1- to C20-alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers,
b) at least 0.1% by weight, based on the total amount of monomers, of at least one monomer having at least one acid group, preferably selected from the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, sulfopropyl methacrylate and mixtures of these monomers;
c) optionally at least one further monomer distinct from the monomers a) and b).

9. The process according to any of the preceding claims, wherein the dispersion adhesive composition comprises as the adhesive polymer at least one polyurethane constructed from

a) at least one monomeric diisocyanate,
b) at least one diol, of which

b1) 10 to 100 mol%, based on the total amount of the diols (b), have a molecular weight of 500 to 5000 g/mol and
b2) 0 to 90 mol%, based on the total amount of the diols (b), have a molecular weight of 60 to 500 g/mol,

c) at least one monomer distinct from the monomers (a) and (b) having at least one isocyanate group or at least one isocyanate-reactive group which further bears at least one hydrophilic group or a potentially hydrophilic group, and
d) optionally at least one further compound distinct from the monomers (a) to (c) having at least two reactive groups selected from alcoholic hydroxyl groups, primary or secondary amino groups or isocyanate groups, and
e) optionally at least one monofunctional compound distinct from the monomers (a) to (d) having a reactive group which is an alcoholic hydroxyl group, a primary or secondary amino group or an isocyanate group.

10. The process according to the preceding claim, wherein the diisocyanates a) are selected from diisocyanates of the formula $X(NCO)_2$, wherein X represents an acyclic aliphatic hydrocarbon radical having 4 to 15 carbon atoms, a cycloaliphatic hydrocarbon radical having 6 to 15 carbon atoms, an aromatic hydrocarbon radical having 6 to 15 carbon atoms or an araliphatic hydrocarbon radical having 7 to 15 carbon atoms, preferably selected from the group consisting of hexamethylene diisocyanate, 1-isocyanato-3,5,5-trimethyl-5-isocyanatomethylcyclohexane, 2,6-diisocyanatotoluene, 2,4-diisocyanatotoluene and tetramethylxylylene diisocyanate or a mixture thereof;
the diols b1) are selected from polyester diols, polycarbonate diols and polyether diols; and the compound c) is selected from dihydroxycarboxylic acids, diaminocarboxylic acids and diaminosulfonic acids.

**11.** The process according to either of claims 9 and 10, wherein the content of anionic or potentially anionic groups in the polyurethane is 30 to 1000 mmol/kg of polyurethane.

**12.** The process according to any of claims 1 to 8, wherein the dispersion adhesive composition comprises as the adhesive polymer at least one polymer producible by free-radical emulsion polymerization of ethylenically unsaturated, free-radically polymerizable monomers comprising

a) 60% to 99.9% by weight, based on the total amount of monomers, of at least one monomer selected from the group consisting of C1- to C20-alkyl acrylates, C1- to C20-alkyl methacrylates, vinylaromatics having up to 20 carbon atoms, and
b) 0.1% to 5% by weight, based on the total amount of monomers, of at least one monomer having at least one acid group selected from acrylic acid, methacrylic acid and itaconic acid and
c) 0% to 10% by weight, based on the total amount of monomers, of further monomers distinct from the monomers a) to b), selected from the group consisting of acrylamide, methacrylamide, N-methylolacrylamide, N-methylolmethacrylamide, phenyloxy-ethylglycol mono(meth)acrylate, hydroxyl-comprising monomers, amino-comprising monomers, nitriles, alpha,beta-monoethylenically unsaturated C3-C8-carboxylic acids, bifunctional monomers which comprise not only an ethylenically unsaturated double bond but also at least one glycidyl group, oxazoline group, ureido group or ureido-analogous group, and crosslinking monomers having more than one free-radically polymerizable group.

**13.** The process according to either of claims 8 and 12, wherein the monomers a) are selected from C1- to C10-alkyl acrylates, C1- to C10-alkyl methacrylates and styrene.

**14.** The process according to any of claims 8 and 12 to 13, wherein the monomers a) are employed in an amount of at least 80% by weight, based on the total amount of the monomers, and are selected from the group consisting of C1- to C10-alkyl acrylates, C1- to C10-alkyl methacrylates, styrene, and a mixture thereof; and the monomers b) are employed in an amount of 0.5% to 5% by weight, based on the total amount of the monomers, and are selected from the group consisting of acrylic acid, methacrylic acid, itaconic acid and a mixture thereof.

**15.** The process according to any of claims 1 to 8 and 12 to 14, wherein the adhesive polymer dispersed in the aqueous phase is a styrene/acrylate copolymer formed from a monomer mixture comprising styrene and at least one monomer selected from C1- to C20-alkyl acrylates and C1- to C20-alkyl methacrylates.

**16.** The process according to any of claims 1 to 8 and 12 to 15, wherein the dispersion adhesive composition comprises water-dispersed polymer particles having an average particle diameter of greater than 200 nm, preferably greater than 250 nm, wherein the polymer particles have a monomodal particle size distribution and a uniform glass transition temperature,

produced by free-radical emulsion polymerization of a single monomer mixture comprising ethylenically unsaturated, free-radically polymerizable monomers, using a polymer seed,
less than 0.8 parts by weight of emulsifier, based on 100 parts by weight of monomers,
without addition of protective colloids and without formation of protective colloids in situ,
wherein the monomer mixture consists of

a) at least 60% by weight, based on the total amount of monomers, of at least one monomer selected from the group consisting of C1- to C20-alkyl acrylates, C1-to C20-alkyl methacrylates, vinyl esters of carboxylic acids comprising up to 20 carbon atoms, vinylaromatics having up to 20 carbon atoms, vinyl halides, vinyl ethers of alcohols comprising 1 to 10 carbon atoms, aliphatic hydrocarbons having 2 to 8 carbon atoms and one or two double bonds, and mixtures of these monomers,
b) at least 0.1% by weight, based on the total amount of monomers, of at least one monomer having at least one acid group;
c) optionally at least one further monomer distinct from the monomers a) and b);

wherein the feeding of the monomer mixture is carried out during the polymerization at a first feed rate and at at least one second feed rate, wherein the first feed rate is preferably slower than the second feed rate and wherein the acid groups of the monomers b) are fully or partially neutralized by feeding of a base during the emulsion polymerization, wherein the feeding of the base commences during the emulsion polymerization once at least 5% by weight, preferably 10% to 70% by weight, of the total monomer mixture is present in the reaction

vessel under polymerization conditions.

**17.** The process according to any of the preceding claims, wherein the dispersion adhesive composition comprises at least one crosslinkable adhesive polymer dispersed in the aqueous phase and at least one reactive crosslinker.

**18.** The process according to the preceding claim, wherein the crosslinker is a polyisocyanate.

**19.** The process according to the preceding claim, wherein the material of the film substrate is selected from the group consisting of polyethylene, oriented polypropylene, unoriented polypropylene, polyamide, polyethylene terephthalate, polyacetate, cellophane, metallized films and metal foils.

**20.** The process according to any of the preceding claims, wherein the dispersion adhesive composition is free from defoamers based on silicone and/or free from defoamers based on organic oils.

**21.** The use of an aqueous dispersion adhesive composition comprising

(a) at least one adhesive polymer dispersed in the aqueous phase and
(b) polyvinylpyrrolidone dissolved in the aqueous phase

for producing films mechanically coated with the dispersion adhesive composition, preferably for producing composite films, or for laminating rigid shaped articles with flexible decorative films mechanically coated with the dispersion adhesive composition, wherein the aqueous dispersion adhesive composition is applied to a film substrate by means of a coating machine having at least one rotating roller, wherein the web speed of the film substrate is at least 150 m/minute.

**22.** The use of polyvinylpyrrolidone as a defoamer for aqueous dispersion adhesive compositions applied to a film substrate using a coating machine having at least one rotating roller, wherein the web speed of the film substrate is at least 150 m/minute.

**Revendications**

**1.** Procédé pour la préparation d’articles revêtus par un adhésif, une composition aqueuse d’adhésif en dispersion, contenant

(a) au moins un polymère adhésif dispersé dans la phase aqueuse et
(b) au moins une polyvinylpyrrolidone dissoute dans la phase aqueuse,

étant appliquée sur un substrat en feuille au moyen d’une machine de revêtement comportant au moins un rouleau rotatif, la vitesse de bande du substrat en feuille étant supérieure ou égale à 150 m/min, de préférence supérieure ou égale à 200 m/min, et le substrat en feuille revêtu étant éventuellement collé avec un autre substrat.

**2.** Procédé selon la revendication précédente, **caractérisé en ce que** les articles revêtus par un adhésif sont choisis parmi des stratifiés et des articles autoadhésifs.

**3.** Procédé selon l’une quelconque des revendications précédentes, **caractérisé en ce que** les articles sont des feuilles composites, au moins deux feuilles étant collées ensemble en utilisant la composition aqueuse d’adhésif en dispersion.

**4.** Procédé selon l’une quelconque des revendications précédentes, **caractérisé en ce que** la composition d’adhésif en dispersion présente une valeur supérieure à 120 minutes dans le test de mousse selon Billhöfer, mesurée à 250 m/min comme divulgué dans la description.

**5.** Procédé selon l’une quelconque des revendications précédentes, **caractérisé en ce que** la polyvinylpyrrolidone présente une valeur K de 25 à 100, mesurée à 25 °C en tant que solution à 1 % dans l’eau.

**6.** Procédé selon l’une quelconque des revendications précédentes, **caractérisé en ce que** la composition d’adhésif en dispersion contient

(i) de 30 à 60 % en poids de l'au moins un polymère adhésif et
(ii) de 0,02 à 2 % en poids de la polyvinylpyrrolidone.

7. Procédé selon l'une quelconque des revendications précédentes, **caractérisé en ce que** le polymère adhésif présente une température de transition vitreuse de -40 à +15 °C, de préférence de -10 à +10 °C, mesurée par calorimétrie différentielle à balayage avec une vitesse de chauffage de 20 °C/min.

8. Procédé selon l'une quelconque des revendications précédentes, **caractérisé en ce que** la composition d'adhésif en dispersion contient

(i) au moins un polymère adhésif dispersé dans la phase aqueuse et
(ii) une polyvinylpyrrolidone dissoute dans la phase aqueuse,

le polymère adhésif étant choisi parmi des polyuréthanes et des polymères qui peuvent être préparés par polymérisation radicalaire en émulsion de monomères éthyléniquement insaturés polymérisables par voie radicalaire comprenant

a) au moins 60 % en poids, par rapport à la quantité totale de monomères, d'au moins un monomère choisi dans le groupe constitué par des acrylates d'alkyle en C1 à C20, des méthacrylates d'alkyle en C1 à C20, des esters de vinyle d'acides carboxyliques contenant jusqu'à 20 atomes de C, des composés vinylaromatiques comportant jusqu'à 20 atomes de C, des halogénures de vinyle, des éthers de vinyle d'alcools contenant de 1 à 10 atomes de C, des hydrocarbures aliphatiques comportant 2 à 8 atomes de C et une ou deux doubles liaisons et des mélanges de ces monomères,
b) au moins 0,1 % en poids, par rapport à la quantité totale de monomères, d'au moins un monomère comportant au moins un groupe de type acide, de préférence choisi dans le groupe constitué par l'acide acrylique, l'acide méthacrylique, l'acide itaconique, l'acide maléique, l'acide fumarique, l'acide crotonique, l'acide vinyleacétique, l'acide vinyllactique, l'acide vinylsulfonique, l'acide styrène sulfonique, l'acide acrylamidométhylpropanesulfonique, l'acrylate de sulfopropyle, le méthacrylate de sulfopropyle et des mélanges de ces monomères ;
c) éventuellement au moins un autre monomère différent des monomères a) et b).

9. Procédé selon l'une quelconque des revendications précédentes, **caractérisé en ce que** la composition d'adhésif en dispersion contient en tant que polymère adhésif au moins un polyuréthane qui est construit à partir de

a) au moins un diisocyanate monomérique,
b) au moins un diol, duquel

b1) 10 à 100 % en moles, par rapport à la quantité totale des diols (b), présentent un poids moléculaire de 500 à 5 000 g/mole, et
b2) 0 à 90 % en moles, par rapport à la quantité totale des diols (b), présentent un poids moléculaire de 60 à 500 g/mole,

c) au moins un monomère différent des monomères (a) et (b) comportant au moins un groupe d'isocyanate ou moins un groupe réactif envers des groupes isocyanate, qui porte par ailleurs au moins un groupe hydrophile ou un groupe potentiellement hydrophile, et
d) éventuellement au moins un autre composé différent des monomères (a) à (c) comportant au moins deux groupes réactifs qui sont choisis parmi des groupes hydroxyle alcoolique, des groupes amino primaire ou secondaire et des groupes isocyanate, et
e) éventuellement au moins un composé monovalent différent des monomères (a) à (d) comportant un groupe réactif, qui est un groupe hydroxyle alcoolique, un groupe amino primaire ou secondaire ou un groupe isocyanate.

10. Procédé selon la revendication précédente, **caractérisé en ce que** les diisocyanates a) sont choisis parmi des diisocyanates de formule $X(NCO)_2$, X représentant un radical hydrocarboné aliphatique non cyclique comportant 4 à 15 atomes de carbone, un radical hydrocarboné cycloaliphatique comportant 6 à 15 atomes de carbone, un radical hydrocarboné aromatique comportant 6 à 15 atomes de carbone ou un radical hydrocarboné araliphatique comportant 7 à 15 atomes de carbone, de préférence choisi dans le groupe constitué par le diisocyanate d'hexamethylène, le 1-isocyanato-3,5,5-triméthyl-5-isocyanatométhylcyclohexane, le 2,6-diisocyanatotoluène, le 2,4-diisocyanatotoluène et le diisocyanate de tétraméthylxylylène ou leur mélange ;

les diols b1) sont choisis parmi des polyesterdiols, des polycarbonatediols et des polyétherdiols ;
et le composé c) est choisi parmi des acides dihydroxycarboxyliques, des acides diaminocarboxyliques et des acides diaminosulfoniques.

**11.** Procédé selon l'une quelconque des revendications 9 et 10, **caractérisé en ce que** la teneur en groupes anioniques ou potentiellement anioniques dans le polyuréthane est de 30 à 1 000 mmole/kg de polyuréthane.

**12.** Procédé selon l'une quelconque des revendications 1 à 8, **caractérisé en ce que** la composition d'adhésif en dispersion contient en tant que polymère adhésif au moins un polymère qui peut être préparé par polymérisation radicalaire en émulsion de monomères éthyléniquement insaturés, polymérisables par voie radicalaire, comprenant

a) 60 à 99,9 % en poids, par rapport à la quantité totale de monomères, d'au moins un monomère choisi dans le groupe constitué par des acrylates d'alkyle en C1 à C20, des méthacrylates d'alkyle en C1 à C20, des composés vinylaromatiques comportant jusqu'à 20 atomes de C et
b) 0,1 à 5 % en poids, par rapport à la quantité totale de monomères, d'au moins un monomère comportant au moins un groupe de type acide, choisi parmi l'acide acrylique, l'acide méthacrylique et l'acide itaconique et
c) 0 à 10 % en poids, par rapport à la quantité totale de monomères, d'autres monomères différents des monomères a) à b), choisis dans le groupe constitué par l'acrylamide, le méthacrylamide, le N-méthylolacrylamide, le N-méthylolméthacrylamide, le mono(méth)acrylate de phényloxyéthylglycol, des monomères contenant des groupes hydroxyle, des monomères contenant des groupes amino, des nitriles d'acides carboxyliques en C3 à C8 alpha,bêta-monoéthyléniquement insaturés, des monomères difonctionnels qui, outre une double liaison éthyléniquement insaturée, présentent au moins un groupe glycidyle, un groupe oxazoline, un groupe uréido ou un groupe analogue à uréido, et des monomères réticulants qui présentent plus d'un groupe polymérisable par voie radicalaire.

**13.** Procédé selon l'une quelconque des revendications 8 à 12, **caractérisé en ce que** les monomères a) sont choisis parmi des acrylates d'alkyle en C1 à C10, des méthacrylates d'alkyle en C1 à C10 et le styrène.

**14.** Procédé selon l'une quelconque des revendications 8, 12 et 13, **caractérisé en ce que** les monomères a) sont utilisés en une quantité d'au moins 80 % en poids, par rapport à la quantité totale de monomères, et sont choisis dans le groupe constitué par des acrylates d'alkyle en C1 à C10, des méthacrylates d'alkyle en C1 à C10, le styrène et leurs mélanges ; et les monomères b) sont utilisés en une quantité de 0,5 à 5 % en poids, par rapport à la quantité totale de monomères et sont choisis dans le groupe constitué par l'acide acrylique, l'acide méthacrylique, l'acide itaconique et leurs mélanges.

**15.** Procédé selon l'une quelconque des revendications 1 à 8 et 12 à 14, **caractérisé en ce que** le polymère adhésif dispersé dans la phase aqueuse est un copolymère de styrène/acrylate, formé à partir d'un mélange de monomères contenant du styrène et au moins un monomère choisi parmi des acrylates d'alkyle en C1 à C20 et des méthacrylates d'alkyle en C1 à C20.

**16.** Procédé selon l'une quelconque des revendications 1 à 8 et 12 à 15, **caractérisé en ce que** la composition d'adhésif en dispersion contient des particules de polymère dispersées dans l'eau dotées d'un diamètre moyen de particule supérieur à 200 nm, de préférence supérieur à 250 nm, les particules de polymère présentant une distribution de particules monomodale et une température de transition vitreuse homogène,

préparées par polymérisation radicalaire en émulsion d'un unique mélange de monomères contenant des monomères éthyléniquement insaturés polymérisables par voie radicalaire, en utilisant une semence de polymère, moins de 0,8 partie en poids d'émulsifiant, par rapport à 100 parties en poids de monomères,
sans ajout de colloïdes protecteurs et sans formation *in situ* de colloïdes protecteurs,
le mélange de monomères étant constitué de

a) au moins 60 % en poids, par rapport à la quantité totale de monomères, d'au moins un monomère choisi dans le groupe constitué par des acrylates d'alkyle en C1 à C20, des méthacrylates d'alkyle en C1 à C20, des esters de vinyle d'acides carboxyliques contenant jusqu'à 20 atomes de C, des composés vinylaromatiques comportant jusqu'à 20 atomes de C, des halogénures de vinyle, des éthers de vinyle d'alcools contenant 1 à 10 atomes de C, des hydrocarbures aliphatiques comportant 2 à 8 atomes de C et une ou deux doubles liaisons et des mélanges de ces monomères,
b) au moins 0,1 % en poids, par rapport à la quantité totale de monomères, d'au moins un monomère

comportant au moins un groupe de type acide ;
c) éventuellement au moins un autre monomère différent des monomères a) et b) ;

l'alimentation du mélange de monomères pendant la polymérisation étant réalisée avec une première vitesse d'alimentation et avec au moins une deuxième vitesse d'alimentation, la première vitesse d'alimentation étant de préférence plus lente que la deuxième vitesse d'alimentation et les groupes de type acide des monomères b) étant totalement ou partiellement neutralisés par alimentation d'une base pendant la polymérisation en émulsion, l'alimentation de la base pendant la polymérisation en émulsion commençant après qu'au moins 5 % en poids, de préférence 10 à 70 % en poids du mélange de monomères total est présent dans le récipient de réaction dans des conditions de polymérisation.

**17.** Procédé selon l'une quelconque des revendications précédentes, **caractérisé en ce que** la composition d'adhésif en dispersion contient au moins un polymère adhésif réticulable dispersé dans la phase aqueuse et au moins un agent de réticulation réactif.

**18.** Procédé selon la revendication précédente, **caractérisé en ce que** l'agent de réticulation est un polyisocyanate.

**19.** Procédé selon la revendication précédente, **caractérisé en ce que** le matériau du substrat en feuille est choisi dans le groupe constitué par un polyéthylène, un polypropylène orienté, un polypropylène non étiré, un polyamide, un poly(téréphtalate d'éthylène), un polyacétate, une cellophane, des feuilles métallisées et des feuilles métalliques.

**20.** Procédé selon l'une quelconque des revendications précédentes, **caractérisé en ce que** la composition d'adhésif en dispersion est exempte d'antimousses à base de silicone et/ou exempte d'antimousses à base d'huiles organiques.

**21.** Utilisation d'une composition aqueuse d'adhésif en dispersion contenant

(a) au moins un polymère adhésif dispersé dans la phase aqueuse et
(b) une polyvinylpyrrolidone dissoute dans la phase aqueuse

pour la préparation à la machine de feuilles revêtues par la composition d'adhésif en dispersion, de préférence pour la préparation de feuilles composites, ou pour le contrecollage de corps moulés rigides avec des feuilles de décoration flexibles revêtues à la machine par la composition d'adhésif en dispersion, la composition aqueuse d'adhésif en dispersion étant appliquée sur un substrat en feuille au moyen d'une machine de revêtement comportant au moins un rouleau rotatif, la vitesse de bande du substrat en feuille étant d'au moins 150 m/min.

**22.** Utilisation d'une polyvinylpyrrolidone comme antimousse pour des compositions aqueuses d'adhésif en dispersion qui sont appliquées sur un substrat en feuille au moyen d'une machine de revêtement comportant au moins un rouleau rotatif, la vitesse de bande du substrat en feuille étant d'au moins 150 m/min.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9823656 A
- WO 0050480 A
- WO 2017102497 A
- US 2013078407 A
- US 4337325 A
- EP 155557 A
- WO 2016124251 A
- EP 622378 A
- US 3905929 A
- US 3920598 A
- DE 1495745 A
- US 3412054 A
- DE 3911827 A
- DE 2034479 A
- DE 1954090 B
- CA 1129128 A
- US 4269748 A
- US 4292226 A
- US 4192937 A
- WO 2013117428 A


### In der Beschreibung aufgeführte Nicht-Patentliteratur


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. 5,A21, 169
- **J. BRANDRUP ; E.H. IMMERGUT.** Polymer Handbook. J. Wiley, 1966
- Makromolekulare Stoffe. **HOUBEN-WEYL.** Methoden der organischen Chemie. Georg-Thieme-Verlag, 1961, vol. XIV/1, 411-420
- Ullmanns Enzyklopädie der technischen Chemie. vol. 19, 62-65
- Ullmanns Enzyklopädie der technischen Chemie. vol. 19, 311-313
- *Tackifier sind z.B. aus Adhesive Age,* Juli 1987, 19-23
- *Polym. Mater. Sci. Eng.,* 1989, vol. 61, 588-592